# EUROPEAN PATENT SPECIFICATION

(11) **EP 2 608 044 B1**
(45) Date of publication and mention of the grant of the patent: **26.11.2014**
(21) Application number: 12187771.6
(22) Date of filing: 09.10.2012
(51) Int. Cl.: G06F 12/02, G06F 12/14, G06F 12/10

(54) **Information processing apparatus and memory access method**
Informationsverarbeitungsvorrichtung und Speicherzugriffsverfahren
Appareil de traitement d'informations et procédé d'accès à la mémoire

(30) Priority: 20.12.2011 JP 2011279022
(43) Date of publication of application: 26.06.2013
(73) Proprietor: FUJITSU LIMITED, Kawasaki-shi, Kanagawa 211-8588 (JP)
(72) Inventor: Koinuma, Hideyuki, Kanagawa, 211-8588 (JP); Okada, Seishi, Kanagawa, 211-8588 (JP); Sugizaki, Go, Kanagawa, 211-8588 (JP)
(74) Representative: Hoffmann Eitle

(56) References cited:
- EP-A2- 0 603 994
- US-A1- 2009 089 537
- US-B1- 6 510 496

## Description

### FIELD

The embodiments discussed herein are directed to an information processing apparatus and a method of accessing a memory.

### BACKGROUND

Relatedly, symmetric multiprocessor (SMP) technology is known in which a plurality of arithmetic processing units shares a main storage device. As an example of an information processing system to which the SMP technology is applied, an information processing system is known in which a plurality of nodes each including an arithmetic processing unit and a main storage device are connected to each other through the same bus, and arithmetic processing units share each main storage device through the bus.

In such an information processing system, the coherency of data cached by the arithmetic processing unit of each node is maintained, for example, using a snoop system. However, according to the snoop system, the update state of data cached by each arithmetic processing unit is exchanged through the bus, and, accordingly, as the number of nodes increases, the bus becomes a bottleneck, whereby the performance of a memory access deteriorates.

In order to avoid such a bottleneck of the bus, nonuniform memory access (NUMA) technology is known, in which a plurality of nodes are interconnected using an interconnect, and the arithmetic processing units of the nodes share main storage devices of the nodes.

In an information processing system to which such NUMA technology is applied, the storage area of the main storage device of each node is uniquely mapped into a common physical address space. Thus, the arithmetic unit of each node identifies a node at which a storage area represented by the physical address of an access target exists and accesses the main storage device of the identified node through the interconnect.

Patent Document 1: Japanese Laid-open Patent Publication No. 2000-235558

Non-Patent Document 1: Computer Architecture: A Quantitative Approach, Second Edition, John L. Hennessy, David A. Patterson, §8.4

Here, according to the above-described NUMA technology, the coherency of data that is cached by the arithmetic processing unit of each node is not maintained. Thus, it may be considered to employ a cache coherent NUMA (ccNUMA) in which a mechanism that maintains the coherency of the data cached by the arithmetic processing unit of each node is included.

However, in an information processing system to which the ccNUMA is applied, each node identifies a node at which a storage area that is an access target is present, and accordingly, the address conversion needs to be performed with high efficiency. In addition, there are cases where each node divides the main storage device into a storage area that is used only by the node and a storage area that is commonly used together with the other nodes. In such a case, each node needs to efficiently determine whether a storage area as an access target is a storage area that is commonly used together with the other nodes.

Prior art US 2009/089537 A1 refers to a method for translating memory addresses in a plurality of nodes, that includes receiving a first memory access request initiated by a processor of a first node of the plurality of nodes, translating the process virtual address to a global system address, translating the global system address to an identifier corresponding to a second node, and sending a first message requesting the first memory operation to the second node based on the identifier.

Prior art EP 0603994 A2 refers to a system information storage section storing access information and space identifying information, a plurality of address translation sections translating virtual addresses into real addresses, a selection section selecting any one of the plurality of address translation sections on the basis of the space identifying information, and a transfer control section reading the data of the storage on the basis of the real address obtained by the selected address translation section.

According to an aspect of the present invention, a memory access made by each arithmetic processing unit can be efficiently performed.

### SUMMARY

According to an aspect of the embodiments, an information processing apparatus includes a plurality of nodes, and an interconnect that connects the plurality of nodes to each other. The each of the plurality of nodes includes a processor, a storage unit, and a first converting unit that performs conversion between a logical address and a physical address. The each of the plurality of nodes includes a second converting unit that performs conversion between the physical address and a processor identification information for identifying processor included in the each of the plurality of nodes. The each of the plurality of nodes includes a transmitting unit that transmits transmission data including the physical address and the processor identification information for accessing a storing area indicated by the physical address. The each of the plurality of nodes includes a receiving unit that receives the transmission data transmitted from another node through the interconnect. The each of the plurality of nodes includes a local determining unit that determines whether an access is an access to a local area of the storage unit being accessible from the node including the storage unit or an access to a shared area of the storage unit being accessible from the plurality of nodes based on the physical address included in the transmission data received by the receiving unit.

### BRIEF DESCRIPTION OF DRAWINGS

FIG. 1 is a diagram that illustrates an example of an information processing system according to First Embodiment;
FIG. 2 is a diagram that illustrates the functional configuration of a building block according to First Embodiment;
FIG. 3 is a diagram that illustrates the range of physical addresses that are allocated to the memories of the building blocks according to First Embodiment;
FIG. 4 is a diagram that illustrates physical addresses allocated to each memory by the information processing system according to First Embodiment;
FIG. 5 is a first diagram that illustrates a variation in allocating physical addresses;
FIG. 6 is a second diagram that illustrates a variation in allocating physical addresses;
FIG. 7 is a diagram that illustrates the functional configuration of a CPU according to First Embodiment;
FIG. 8 is a diagram that illustrates an example of information that is stored in a node map according to First Embodiment;
FIG. 9 is a first diagram that illustrates an example of a variation of the information that is stored in the node map;
FIG. 10 is a second diagram that illustrates an example of a variation of the information that is stored in the node map;
FIG. 11A is a diagram that illustrates an example of a cache tag;
FIG. 11B is a diagram that illustrates a packet that is transmitted by a CPU according to First Embodiment;
FIG. 12 is a diagram that illustrates an example of the process of transmitting a request using the CPU according to First Embodiment;
FIG. 13 is a diagram that illustrates an example of the process that is performed when the CPU according to First Embodiment receives a packet;
FIG. 14 is a flowchart that illustrates the flow of a node map setting process;
FIG. 15 is a flowchart that illustrates the flow of a shared area controlling process;
FIG. 16 is a flowchart that illustrates a shared memory allocating process;
FIG. 17 is a flowchart that illustrates a shared memory attaching process;
FIG. 18 is a flowchart that illustrates a process of an application for using a shared memory;
FIG. 19 is a flowchart that illustrates process of detaching a shared memory between nodes;
FIG. 20 is a flowchart that illustrates a process of releasing a shared memory between nodes;
FIG. 21 is a flowchart that illustrates the flow of a request issuing process;
FIG. 22 is a flowchart that illustrates the flow of a process that is performed when a request is received;
FIG. 23 is a flowchart that illustrates the flow of a process that is performed when the CPU receives a reply;
FIG. 24 is a diagram that illustrates an information processing system according to Second Embodiment;
FIG. 25 is a diagram that illustrates an example of partitions;
FIG. 26A is a diagram that illustrates an example of a node map that is stored by a CPU of partition #A;
FIG. 26B is a diagram that illustrates an example of a node map representing partition #A; and
FIG. 26C is a diagram that illustrates an example of a node map representing partition #B.

### DESCRIPTION OF EMBODIMENTS

Preferred embodiments will be explained with reference to accompanying drawings.

### [a] First Embodiment

First, before embodiments according to the present application are described, a specific example of problems in a related information processing system will be described. For example, the related information processing system converts a logical address that is output by a central processing unit (CPU) for accessing a shared memory area into a shared memory space address. Then, the information processing system identifies a storage area that is an access target of the CPU by converting the shared memory space address into a physical address.

However, according to a technique in which a logical address is converted into a shared memory space address, and the shared memory space address after conversion is converted into a physical address, as described above, the quantity of hardware resources that are necessary for converting the addresses is large. In addition, according to the technique in which a logical address is converted into a shared memory space address, and the shared memory space address after conversion is converted into a physical address, a time for converting the addresses increases.

In addition, when a CPU caches data of the shared memory space, the related information processing system maintains the coherency by transmitting cache information to all the CPUs. However, according to a technique in which the cache information is transmitted to all the CPUs as above, a bottleneck occurs, and the performance of memory accesses deteriorates. In addition, in a related information processing system, in a case where the number of installed CPUs increases, the bus traffic increases in proportion to the increase in the number of CPUs, and accordingly, a bottleneck occurs, whereby the performance of memory accesses deteriorates.

Furthermore, for example, a node stores kernel data and user data in a local area that is accessed by only the node. Accordingly, in order to secure the security of the data stored in the local area and increase the resistance to a software bug, each node needs to determine whether a storage area that is an access target is a shared memory area is accessible by the other nodes or a local memory area or not.

Accordingly, in the related information processing system, data that is stored in the local area is configured to be cacheable, and data that is stored in the shared area is configured not to be cacheable. However, according to the technique of configuring the data stored in the shared area not to be cacheable as above, a delay time for accessing a memory increases. In addition, in a case where it is determined whether an access target is a shared area or a local area each time a memory is accessed from any other node, the scale of a circuit that is used for the determination process increases, and the delay time for the access increases.

In addition, in the related information processing system, each time a node accesses a memory that is included in any other node, the node requires a special channel device or the execution of a direct memory access (DMA) engine program, and accordingly, the performance of memory accesses deteriorates. Furthermore, in the related information processing system, an area of the storage area, which is included in the memory, that is to be configured as a shared area is fixedly set. Accordingly, for example, in the related information processing system, the shared area is not added by adding a node without stopping the system.

Furthermore, in the related information processing system, hardware used for performing a memory access through a channel or a DMA path is added. Accordingly, in the related information processing system, installed hardware is markedly different from that of a system in which the memory is not shared between nodes. As a result, in the related information processing system, in a case where the memory is shared between nodes, a program such as an operating system (OS) needs to be markedly changed.

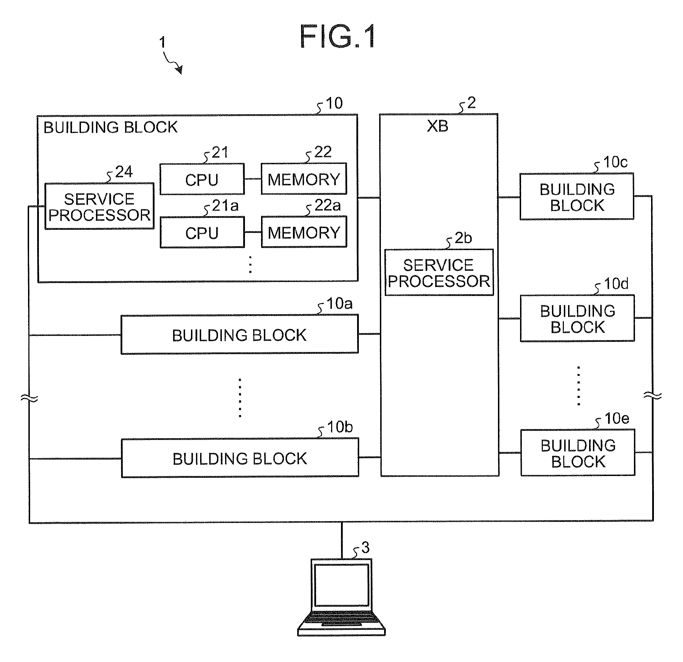

In description presented below, an example of an information processing system that solves the above-described problems will be described as First Embodiment. First, an example of the configuration of the information processing system will be described with reference to FIG. 1. FIG. 1 is a diagram that illustrates an example of the information processing system according to First Embodiment. In the example illustrated in FIG. 1, an information processing system 1 includes a cross-bar switch (XB) 2 and a plurality of building blocks 10 to 10e. The building blocks 10 to 10e are connected to a management terminal 3 through a management network. In addition, the XB 2 includes a service processor 2b.

The building block 10 includes a plurality of CPUs 21 to 21c, a plurality of memories 22 to 22c, and a service processor 24. Here, the other building blocks 10 to 10e have the same configuration as the building block 10, and description thereof will not be presented. Furthermore, in the example illustrated in FIG. 1, the CPUs 21b and 21b and the memories 22b and 22c will not be illustrated.

The XB 2 is a cross-bar switch that connects the building blocks 10 to 10e to one another. In addition, the service processor 2b that is included in the XB 2 is a service processor that manages the service processors that are included in the building blocks 10 to 10e, that is, a service processor that serves as a master. In addition, the management terminal 3 is a terminal that sets or controls the service processors that are included in the building blocks 10 to 10e through the management network. In addition, in the case of a small-scale configuration in which nodes of a small number are interconnected, the building blocks may be directly connected to each other without going through the XB 2.

The building blocks 10 to 10e independently operate operating systems. In other words, the operating systems, which are operated by the building blocks 10 to 10e, are operated in partitions that are different from each other for the building blocks. Here, a partition represents, when the same OS operates, a group of building blocks that operate as one system, when viewed from the OS that operates.

For example, the building blocks 10 to 10a operate as partition #A, and the building blocks 10b to 10d operate as partition #B. In such a case, the OS operated by the building block 10 identifies that the building blocks 10 and 10a operate as one system, and the OS operated by the building block 10b identifies that the building blocks 10b to 10d operate as one system.

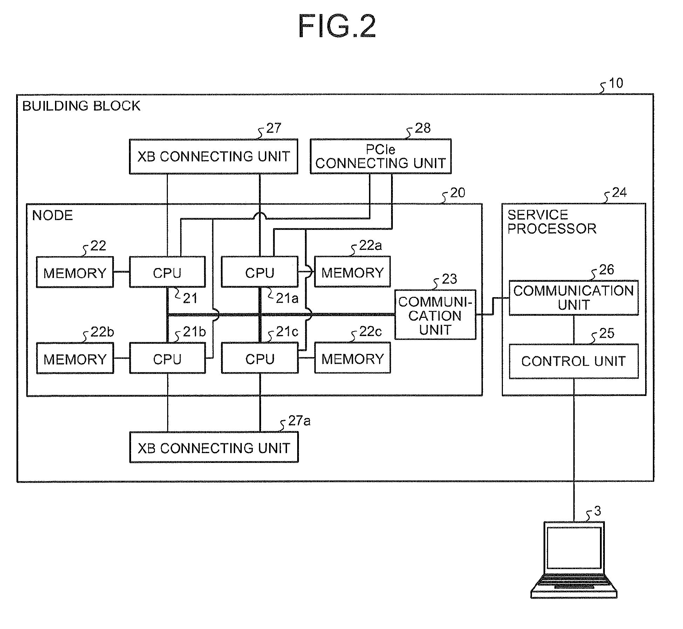

Next, the configuration of a building block will be described with reference to FIG. 2. FIG. 2 is a diagram that illustrates the functional configuration of the building block according to First Embodiment. In the example illustrated in FIG. 2, the building block 10 includes a node 20, the service processor 24, XB connecting units 27 and 27a, and a Peripheral Component Interconnect Express (PCIe) connecting unit 28.

The node 20 includes the plurality of CPUs 21 to 21c, the plurality of memories 22 to 22c, and a communication unit 23. In addition, the service processor 24 includes a control unit 25 and a communication unit 26. In the example illustrated in FIG. 2, the CPUs 21 to 21c are directly connected to each other and are connected to the communication unit 23. The memories 22 to 22c are connected to the CPUs 21 to 21c.

The CPUs 21 to 21c are connected to the XB connecting unit 27 or the XB connecting unit 27a. The XB connecting units 27 and 27a may be the same XB connecting units. In addition, the CPUs 21 to 21c are connected to the PCIe connecting unit 28. Furthermore, the communication unit 23 is connected to the communication unit 26 that is included in the service processor 24. The control unit 25, the communication unit 26, the communication unit 23, and the CPUs 21 to 21c, for example, are interconnected through a Joint Test Action Group (JTAG) or an Inter-Integrated Circuit (I2C).

For example, in the example illustrated in FIG. 2, the CPUs 21 to 21c are arithmetic processing units that perform arithmetic processes. In addition, independent memories 22 to 22c are connected to the CPUs 21 to 21c. Furthermore, the CPUs 21 to 21c use the memories 22 to 22c and memories included in the other building blocks 10a to 10e as shared memories. In addition, the CPUs 21 to 21c, as will be described later, have a node map in which a physical address and an identification (CPUID) that is an identifier of the CPU that is connected to a memory to which the physical address is connected are associated with each other.

For example, in a case where the CPUID associated with the physical address that is an access target represents a CPU that is included in a node other than the node 20, the CPU 21 transmits a memory access request to the other node through the XB connecting unit 27 and the XB 2. On the other hand, in a case where the CPUID associated with the physical address that is an access target represents one of the CPUs 21a to 21c, the CPU 21 transmits a memory access request through a direction connection between the CPUs. In other words, in a case where the CPUID associated with the physical address that is an access target is a CPU other than the CPU 21 and represents a CPU that is present at the same node 20 as the node of the CPU 21, the CPU 21 transmits a memory access request through a direct connection between the CPUs.

In addition, in a case where the CPU 21 receives a request for a memory connected thereto from another node, the CPU 21 reads out data as a request target from the memory 22 that is connected thereto and transmits the data to a request source.

Furthermore, the CPUs 21 to 21c have a function of allocating a shared memory that is used by an application by communicating with each other in a case where an executed application requests for the allocation of a shared memory. In addition, each one of the CPUs 21 to 21c is assumed to have a function of performing the same process as a related CPU such as performing address conversion using a TLB and performing a trap process when a TLB miss exception occurs.

The memories 22 to 22c are memories that are shared by all the CPUs included in the information processing system 1. In addition, in the information processing system 1, physical addresses in which the service processors of the building blocks 10 to 10e are mapped into the same physical address space are allocated to the memories that are included in all the building blocks 10 to 10e. In other words, physical addresses having values not overlapping with each other are allocated to all the memories that are included in the information processing system 1.

In addition, each one of the memories 22 and 22c configures a part of the storage area as a shared area that is used by all the CPUs of the information processing system 1 and configures the other part as a local area in which the CPUs 21 to 21c having accesses thereto stores kernel data or user data. In addition, in the memories 22 to 22c, in the physical address space that is used by the information processing system 1, physical addresses in a range in which a bit located at a specific position have a same value are allocated to the shared areas. In addition, in the memories 22 to 22c, physical addresses in a range in which a bit located at a specific position has a value different from the physical addresses allocated to the shared area are allocated to the local area.

For example, in the memories 22 to 22c, each physical address of which the 46-th bit is "0" is allocated to the local areas. In addition, each physical address of which the 46-th bit is "1" is allocated to the shared area. As a more detailed example, physical addresses that are included in "0" to "0x63ff ffff ffff" are allocated to the local areas of the memories 22 to 22c in the physical address space. In addition, physical addresses that are included in "0x6400 000 0000" to "0x1 27ff ffff ffff" are allocated to the shared areas of the memories 22 to 22c in the physical address space.

In addition, in the information processing system 1, physical addresses included in mutually-different ranges are allocated to the memories for the building blocks 10 to 10e. Hereinafter, the range of physical addresses that are allocated to the memories for the building blocks 10 to 10e in the information processing system 1 will be described with reference to the drawings.

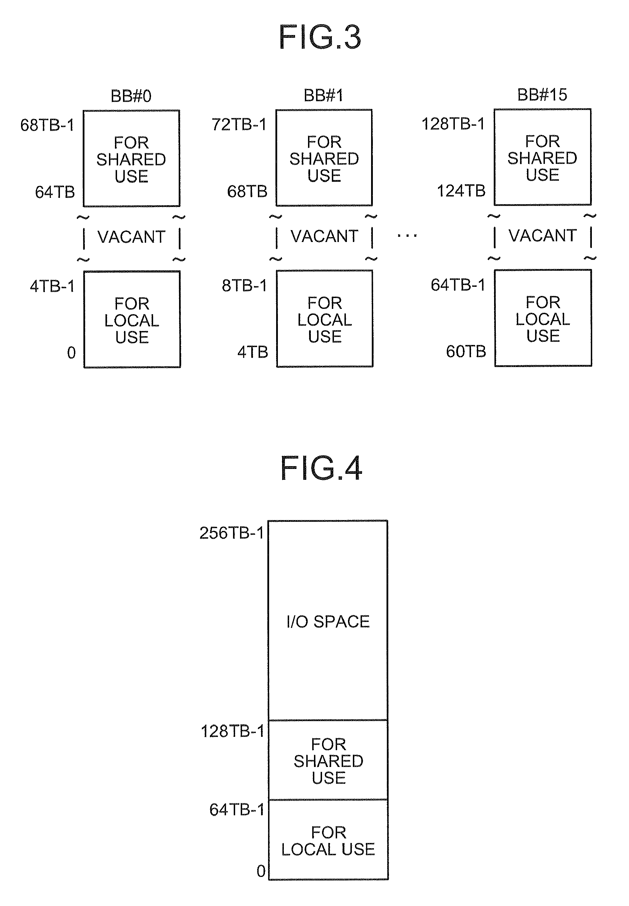

FIG. 3 is a diagram that illustrates the range of physical addresses that are allocated to the memories of the building blocks according to First Embodiment. In the example illustrated in FIG. 3, each building block is represented as a Building Block (BB). Here, BB#0 represents the building block 10, BB#1 represents the building block 10a, and BB#15 represents the building block 10e. In other words, in the example illustrated in FIG. 3, the information processing system 1 is assumed to have 16 building blocks.

In addition, in the example illustrated in FIG. 3, a memory of up to 4 terabytes (TB) is assumed to be mountable on each building block. In description presented below, in order to simplify the representation of a memory address, for example, addresses of "2⁴²" are represented as address of "4 TB".

In the example illustrated in FIG. 3, in the memories 22 to 22c included in the building block 10, physical addresses that are included in a range from address of "0" to "4 TB - 1" in the physical address space are allocated to the local area. In addition, in the memories 22 to 22c included in the building block 10, physical addresses that are included in a range from address of "64 TB" to "68 TB - 1" in the physical address space are allocated to the shared area.

In addition, in the memories included in the building block 10a, physical addresses that are included in a range from address of "4 TB" to "8 TB - 1" in the physical address space are allocated to the local area. In addition, in the memories included in the building block 10a, physical addresses that are included in a range from address of "68 TB" to "72 TB - 1" in the physical address space are allocated to the shared area.

Furthermore, in the memories included in the building block 10e, physical addresses that are included in a range from address of "60 TB" to "64 TB - 1" in the physical address space are allocated to the local area. In addition, in the memories included in the building block 10a, physical addresses that are included in a range from address of "124 TB" to "128 TB - 1" in the physical address space are allocated to the shared area.

As a result, in the information processing system 1, as illustrated in FIG. 4, the physical address space is allocated to all the memories that are included in the building blocks 10 to 10e. FIG. 4 is a diagram that illustrates the physical addresses allocated to the memories by the information processing system according to First Embodiment.

More specifically, in the example illustrated in FIG. 4, the information processing system 1 configures a range from "0" to "64 TB -1" in the physical addresses of "0" to "256 TB -1" as physical addresses to be allocated to the local area. In addition, the information processing system 1 configures a range from "64 TB" to "128 TB - 1" as physical addresses to be allocated to the shared area.

In other words, the information processing system 1 allocates a range in which bit 46 is "0", when a least significant bit is configured as bit 0, to the local area, and allocates a range in which bit 46 is "1" to the shared area. In addition, the information processing system 1 uses a range from address of "128 TB" to "256 TB -1" as an I/O space.

In addition, the examples illustrated in FIGS. 3 and 4 are merely examples, and the information processing system 1 may use another allocation method. Hereinafter, examples of variations in the allocation of physical addresses, which is performed by the information processing system 1, will be described with reference to the drawings.

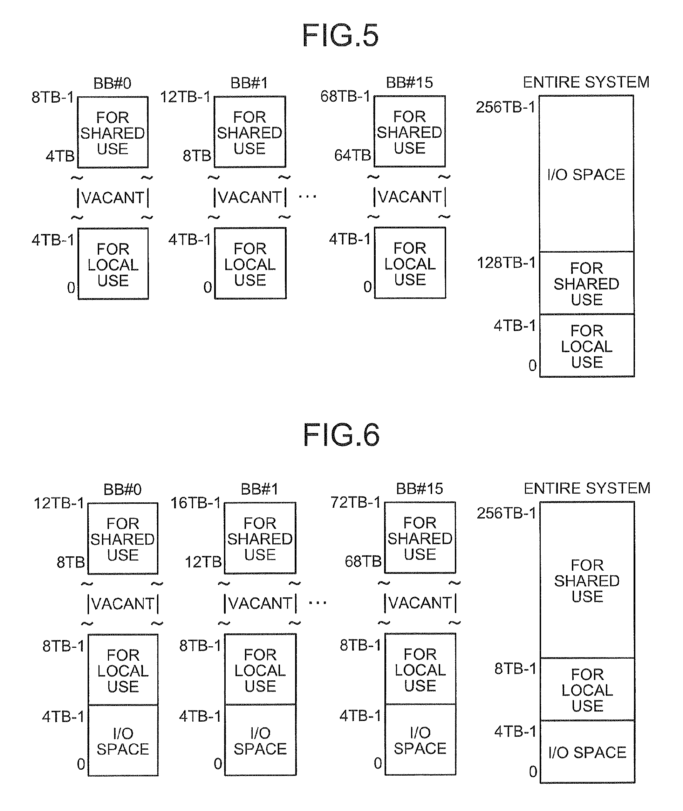

FIG. 5 is a first diagram that illustrates a variation in allocating physical addresses. In the example illustrated in FIG. 5, in the memories included in the building blocks 10 to 10e, physical addresses that are included in a range from "0" to "4 TB -1" are allocated to the local area. In addition, in the example illustrated in FIG. 5, in the memory 22 included in the building block 10, physical addresses that are included in a range from "4 TB" to "8 TB -1" are allocated to the shared area.

Furthermore, in the example illustrated in FIG. 5, in the memory included in the building block 10a, physical addresses that are included in a range from "8 TB" to "12 TB -1" are allocated to the shared area. In addition, in the example illustrated in FIG. 5, in the memory included in the building block 10e, physical addresses that are included in a range from "64 TB" to "68 TB -1" are allocated to the shared area.

As a result, in the example illustrated in FIG. 5, the information processing system 1 allocates physical addresses in a range from "0" to "4 TB -1" in a physical address space to the local area, and allocates physical addresses in a range from "4 TB" to "128 TB -1" to the shared area. In addition, in the example illustrated in FIG. 5, the information processing system 1 uses a range from "128 TB" to "256 TB -1" as an I/O space. In other words, the information processing system 1 allocates a range in which bit 42 is "0", when a least significant bit is configured as bit 0, to the local area and allocates a range in which bit 42 is "1" to the shared area.

FIG. 6 is a second diagram that illustrates a variation in allocating physical addresses. In the example illustrated in FIG. 6, in the memories included in the building blocks 10 to 10e, physical addresses that are included in a range from "0" to "4 TB -1" are reserved for an I/O space. In addition, in the example illustrated in FIG. 6, in the memories included in the building blocks 10 to 10e, physical addresses that are included in a range from "4 TB" to "8 TB -1" are allocated to the local areas.

In addition, in the example illustrated in FIG. 6, in the memories 22 to 22c included in the building block 10, physical addresses that are included in a range from "8 TB" to "12 TB -1" are allocated to the shared area. Furthermore, in the example illustrated in FIG. 6, in the memory included in the building block 10a, physical addresses that are included in a range from "12 TB" to "16 TB -1" are allocated to the shared area. In addition, in the example illustrated in FIG. 6, in the memories included in the building block 10e, physical addresses that are included in a range from "68 TB" to "72 TB -1" are allocated to the shared area.

As a result, in the example illustrated in FIG. 6, the information processing system 1 configures physical addresses in a range from "0" to "4 TB -1" in the physical address space as an I/O space and allocates physical address in a range from "4 TB" to "8 TB -1" to the local area. In addition, in the example illustrated in FIG. 5, the information processing system 1 allocates physical address in a range from "8 TB" to "256 TB -1" to the shared area. In other words, the information processing system 1 allocates a range in which bit 43, when a least significant bit is configured as bit 0, is "0" to the local area and allocates physical addresses in a range in which bit 43 is "1" to the shared area.

Referring back to FIG. 2, the control unit 25 controls the building block 10. For example, the control unit 25 performs management of the power of the building block 10, monitoring and controlling abnormality occurring inside the building block 10, and the like. In addition, the control unit 25 is connected through the management network to the management terminal 3 and control units of the service processors that are included in the other building blocks 10 to 10e and can perform control that is instructed by the management terminal 3 and perform control in association with the building blocks 10 to 10e. Furthermore, the control unit 25 can communicate with the operating system(s) that is/are running on the CPUs 21 to 21c.

In addition, in First Embodiment, although the service processors included in the building blocks 10 to 10e are connected to each other through the management network, an embodiment is not limited thereto. For example, the service processors may communicate with each other through the XB that connects the building blocks 10 to 10e to each other.

Furthermore, the control unit 25 accesses the CPUs 21 to 21c through the communication unit 26 and the communication unit 23. Then, the control unit 25, as will be described later, performs controlling CPUs in the building blocks by updating the like of node maps existing on the building blocks 10 to 10e.

In addition, the communication unit 23 delivers a control signal transmitted from the control unit 25 to the CPUs 21 to 21c through the communication unit 26 that is included in the service processor 24. The communication unit 26 delivers a control signal transmitted from the control unit 25 to the communication unit 23 that is included in the node 20. The XB connecting units 27 and 27a connect the CPUs 21 to 21c to the XB 2 and relays communication between the CPUs that are included in the building blocks 10 to 10e. The PCIe connecting unit 28 relays accesses of the CPUs 21 to 21c to the input/output (I/O) device.

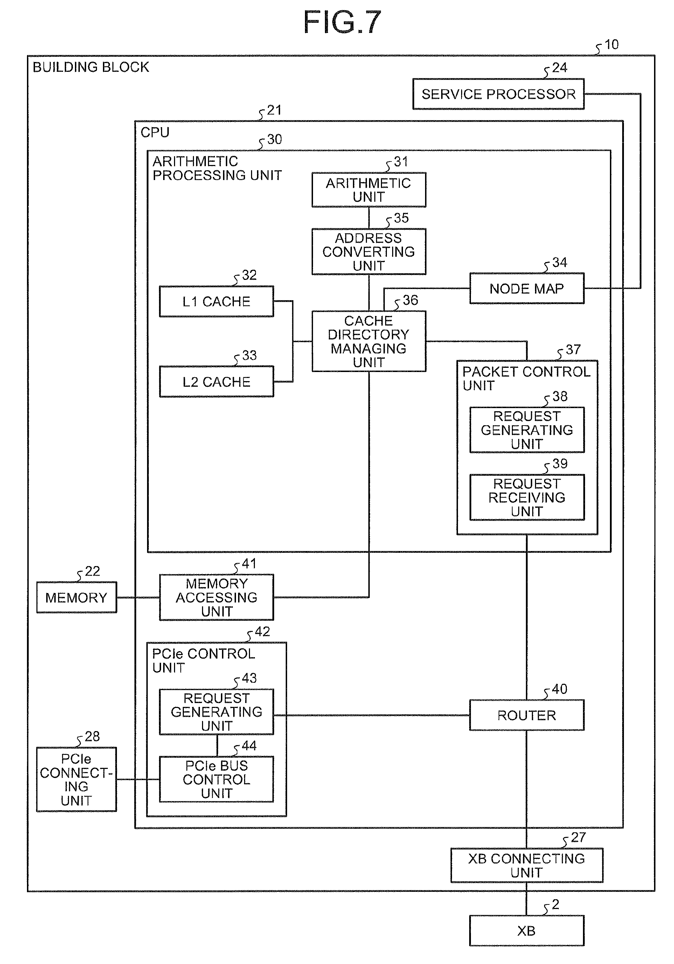

Next, the functional configuration of the CPUs 21 to 21c will be described with reference to FIG. 7. FIG. 7 is a diagram that illustrates the functional configuration of the CPU according to First Embodiment. Here, since the CPUs 21a to 21c have the same function as that of the CPU 21, description thereof will not be presented. In the example illustrated in FIG. 7, the communication units 23 and 26 that connect the service processor 24 and the CPU 21 to each other are not illustrated.

In the example illustrated in FIG. 7, the CPU 21 includes an arithmetic processing unit 30, a router 40, a memory accessing unit 41, and a PCIe control unit 42. The arithmetic processing unit 30 includes an arithmetic unit 31, a Level 1 (L1) cache 32, an L2 cache 33, a node map 34, an address converting unit 35, a cache directory managing unit 36, and a packet control unit 37. The packet control unit 37 includes a request generating unit 38 and a request receiving unit 39. The PCIe control unit 42 includes a request generating unit 43 and a PCIe bus control unit 44.

First, the node map 34 that is included in the arithmetic processing unit 30 will be described. In the node map 34, a physical address and the CPUID of a CPU that is connected to a memory having a storage area represented by the physical address are stored in association with each other. Hereinafter, an example of information stored in the node map 34 will be described with reference to the drawing.

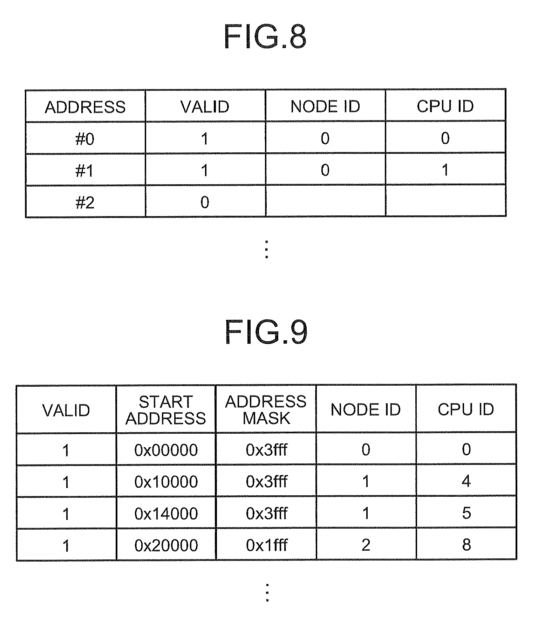

FIG. 8 is a diagram that illustrates an example of information that is stored in the node map according to First Embodiment. In the example illustrated in FIG. 8, in the node map 34, an address, validity, a node ID, a CPUID are stored in association with each other. Here, at the address of each entry, information is stored, which represents an address area including a plurality of addresses that are continuous.

For example, the information processing system 1 divides a physical address space, which is allocated to all the memories, into address areas having the same size and allocates identifiers such as #0, #1, #2, and the like to the address areas. Then, the information processing system 1 stores the identifiers representing the address areas at the addresses of each entry included in the node map 34.

In addition, in the validity of each entry, a validity bit is stored which indicates whether or not a storage area represented by the physical address is accessible. For example, in a case where a storage area represented by the physical address is a shared area that is shared by the CPUs, a validity bit (for example, "1") indicating that an access is enabled is stored.

The node ID is an identifier that represents a node at which the memory to which the physical address is allocated is present. The CPUID is an identifier that represents a CPU connected to the memory to which the physical address is allocated. In other words, in the node map 34, information is stored, which represents a CPU connected to a memory of which the physical address is a physical address as an access target.

For example, in the example illustrated in FIG. 8, in the node map 34, it is represented that an address area having an identifier of "#0" is present at a node of which the node ID is "0", and a CPU having a CPUID of "0" makes an access thereto. In addition, in the node map 34, it is represented that an address area having an identifier of "#1" is present at a node of which the node ID is "0", and a CPU having a CPUID of "1" makes an access thereto. Furthermore, in the node map 34, since an address area having an identifier of "#2" is an address area to which an access will not be carried out by the CPU 21 or an address area that has not been mapped, it is represented that a node ID and a CPUID have not been set thereto.

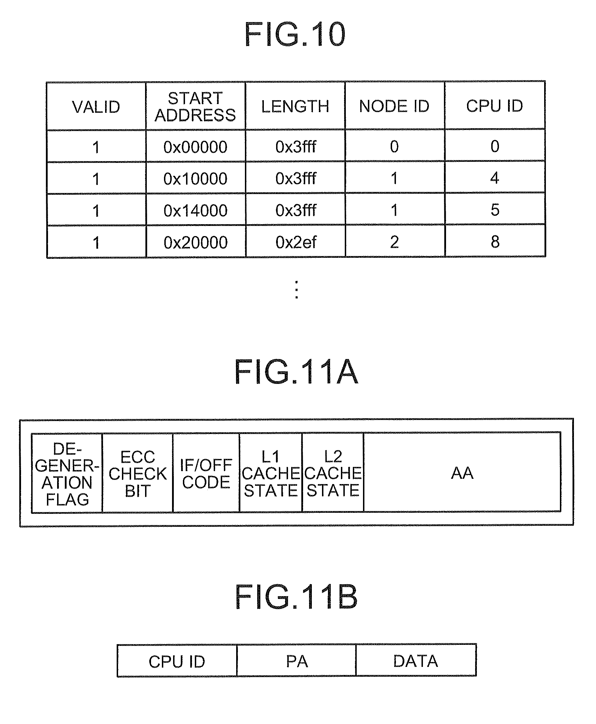

In a case where the node map 34 can represent a CPU to which the physical address as an access target is connected, information may be registered in an arbitrary form other than that of this embodiment. Hereinafter, examples of variations of the node map 34 will be described with reference to FIGS. 9 and 10.

FIG. 9 is a first diagram that illustrates an example of a variation of the information that is stored in the node map. In the example illustrated in FIG. 9, the node map 34 stores each entry with validity, a start address, an address mask, a node ID, and a CPUID being associated with each other. Here, in the start address, a smallest physical address of all the physical addresses included in the address area is stored.

In the address mask, an address mask that represents the range of physical addresses that are managed by the CPU is stored. For example, a case where the address mask of an entry is "0xffff ffff ffff 0000" represents that an address area that coincides with the start address of the same entry in the upper 48 bits is managed by a CPU that is represented by the CPUID of the same entry.

For example, in the example illustrated in FIG. 9, the node map 34 represents that, as a first entry, a range from an address "0x00000" to an address that is acquiring by masking the address using an address mask "0x3fff", that is, a range up to "0x03fff" is one address area. In addition, the node map 34 represents that the address area from "0x00000" to "0x03fff" is present at a node represented by a node ID of "0", and the address area is accessed by a CPU having a CPUID of "0".

Similarly, the node map 34 represents that an address area from "0x10000" to "0x13fff" is present at a node represented by a node ID of "1", and the address area is accessed by a CPU having a CPUID of "4". In addition, the node map 34 represents that an address range from "0x14000" to "0x17fff" is present at the node represented by a node ID of "1", and the address area is accessed by a CPU having a CPUID of "5". Furthermore, the node map 34 represents that an address area from "0x20000" to "0x21fff" is present at a node represented by a node ID of "2", and the address area is accessed by a CPU having a CPUID of "8".

In a case where an address area is represented by a start address and an address mark in the node map 34 as illustrated in FIG. 9, it can be determined based on a combination of logical sums and logical products whether a physical address is included in each address area, and accordingly, the circuit can be easily configured.

FIG. 10 is a second diagram that illustrates an example of a variation of the information that is stored in the node map. In the example illustrated in FIG. 10, an entry is stored in the node map 34, with validity, a start address, a length, a node ID, and a CPUID being associated with each other. Here, the length is information that is used for setting the size of an address area.

For example, in a case where the start address is "0x12 0000", and the length is "0x1 ffff", a CPU that is represented by the CPUID of the same entry allocates physical addresses from "0x12 0000" to "0x13 ffff" to a managed memory.

For example, in the example illustrated in FIG. 10, the node map 34 represents that, as a first entry, a range from an address of "0x00000" in which a length is included in "0x3fff", that is, a range up to "0x03fff" is one address area. In addition, the node map 34 represents that the address area from "0x00000" to "0x03fff" is present at a node represented by a node ID of "0", and the address area is accessed by a CPU having a CPUID of "0".

Similarly, the node map 34 represents that an address area from "0x10000" to "0x13fff" is present at a node represented by a node ID of "1", and the address area is accessed by a CPU having a CPUID of "4". In addition, the node map 34 represents that an address area from "0x14000" to "0x17ff" is present at the node represented by the node ID of "1", and the address area is accessed by a CPU having a CPUID of "5". Furthermore, the node map 34 represents that an address area from "0x20000" to "0x202ef" is present at a node represented by a node ID of "2", and the address area is accessed by a CPU having a CPUID of "8".

In a case where the address area is represented by a start address and a length in the node map 34, as illustrated in FIG. 10, the length of each address area can be set in a flexible manner. In other words, in a case where the address area is represented by a start address and an address mask in the node map 34, an access area in a range in which 1's are consecutive from the least significant bit (LSB) is designated. On the other hand, in a case where each address area is represented by a start address and a length, the length of each address area can be arbitrarily set.

Referring back to FIG. 7, the arithmetic unit 31 is a core of an arithmetic device that executes an OS or an application by performing an arithmetic process. In addition, in a case where data reading is performed, the arithmetic unit 31 outputs a logical address of the storage area in which data as a reading target is stored to the address converting unit 35.

The L1 cache 32 is a cache storing device that temporarily stores data, which is frequently used, out of data or directories. While, similarly to the L1 cache 32, temporally storing data, which is frequently used, out of data or directories, the L2 cache 33 has a storage capacity larger than the L1 cache 32 and the reading/writing speed lower than the L1 cache 32. Here, a directory is information that represents a CPU that has cached data stored in each storage area of the memory 22 or the update state of the cached data.

The address converting unit 35 converts a logical address output by the arithmetic unit 31 into a physical address using a translation lookaside buffer (TLB). For example, the address converting unit 35 includes an TLB that stores an entry in which a logical address and a physical address are associated with each other and outputs the physical address stored in association with the logical address, which is acquired from the arithmetic unit 31, to the cache directory managing unit 36. In addition, in a case where a TLB miss occurs, the address converting unit 35 causes a trap process, and as a result, registers a relation of the physical address and the logical address where the TLB miss occurs in the TLB.

In addition, in a case where the allocation of the shared memory is requested from an application that is executed by the CPU 21, the address converting unit 35 performs the following process. The address converting unit 35 sets an entry, in which a logical address used by an application at the time of accessing a shared area shared by the CPUs 21 to 21c and a physical address of a range that is allocated to the shared area are associated with each other, in the TLB.

On the other hand, in a case where the allocation of a local area is requested from an application or an OS, the address converting unit 35 performs the following process. The address converting unit 35 sets an entry, in which a logical address, which is used by an application at the time of accessing a local area that is dedicatedly used by the CPU 21, or by operating system running on CPU21, and a physical address that is allocated to the local area are associated with each other, in the TLB.

The cache directory managing unit 36 manages cache data and directories. More specifically, the cache directory managing unit 36 acquires a physical address, which is acquired by converting the logical address output by the arithmetic unit 31, from the address converting unit 35.

In a case where the physical address is acquired from the address converting unit 35, the cache directory managing unit 36 checks a directory so as to check whether the data state represented by the physical address is normal. In a case where the data represented by the physical address is cached in the L1 cache 32 or the L2 cache 33, the cached data is output to the arithmetic unit 31.

On the other hand, in a case where the data represented by the physical address is not cached in the L1 cache 32 or the L2 cache 33, the cache directory managing unit 36 determines whether or not the storage area represented by the physical address is present in the memory 22. In a case where the storage area represented by the physical address is not present in the memory 22, the cache directory managing unit 36 refers to the node map 34.

In addition, the cache directory managing unit 36 identifies an entry of a range including the acquired physical address by referring to the node map 34. Then, the cache directory managing unit 36 determines whether or not the CPUID of the identified entry is the CPUID of the CPU 21. Thereafter, in a case where the CPUID of the identified entry is the CPUID of the CPU 21, the cache directory managing unit 36 outputs the physical address to the memory accessing unit 41.

On the other hand, in a case where the CPUID of the identified entry is not the CPUID of the CPU 21, the cache directory managing unit 36 performs the following process. The cache directory managing unit 36 acquires the CPUID and the node ID of the identified entry. Then, the cache directory managing unit 36 outputs the acquired CPUID and physical address to the packet control unit 37.

In a case where the data stored in the storage area that is represented by the output physical address is acquired from the memory accessing unit 41 or the packet control unit 37, the cache directory managing unit 36 stores the acquired data in the L1 cache 32 and the L2 cache 33. Then, the cache directory managing unit 36 outputs the data cached in the L1 cache 32 to the arithmetic unit 31.

In addition, in a case where a physical address is acquired from the packet control unit 37, in other words, in a case where a physical address that is the target of a memory access request from another CPU is acquired, the cache directory managing unit 36 performs the following process. The cache directory managing unit 36 determines whether or not the acquired physical address is a physical address allocated to the local area based on whether a bit of the acquired physical address that is located at a predetermined position is "0" or "1".

For example, in a case where physical addresses of ranges illustrated in FIGS. 3 and 4 are allocated to the memories of the information processing system 1, the cache directory managing unit 36 determines whether bit 46, when a least significant bit is bit 0, is "0" or "1". In a case where bit 46 is "0", the cache directory managing unit 36 determines that the acquired physical address is a physical address that is allocated to the local area. In such a case, the cache directory managing unit 36 instructs the packet control unit 37 to transmit a negative response (access error) to the request source.

On the other hand, in a case where bit 46 is "1", the cache directory managing unit 36 determines that the acquired physical address is a physical address that is allocated to the shared area. In such a case, the cache directory managing unit 36 acquires data that is stored in the storage area represented by the acquired physical address, outputs the acquired data to the packet control unit 37, and instructs the transmission of the data to the request source.

In addition, in a case where the data stored in the memory 22 is to be accessed, the cache directory managing unit 36 performs a process of maintaining the coherence between the data stored in the storage area represented by the physical address and the cached data. For example, the cache directory managing unit 36 refers to a cache tag that represents the state of the cache data and a directory for each cache entry. In addition, the cache directory managing unit 36 performs the process of maintaining the cache coherence and a memory accessing process based on the cache tag and the directory.

Here, FIG. 11A is a diagram that illustrates an example of the cache tag. In the example illustrated in FIG. 11A, the cache tag includes a degeneration flag, an error check and correct (ECC) check bit, an instruction fetch (IF)/opcode, an L1 cache state, an L2 cache state, and address information (AA).

Here, the degeneration flag is a cache line degeneration information that represents degeneration or not. The ECC check bit is a check bit that is added for the redundancy. The IF/opcode is information that illustrates whether data is an instruction or data.

In addition, AA is address information, and, in more detail, a frame address of the physical address is stored therein. The L1 cache state and the L2 cache state are information that represents the states of data stored in the L1 cache 32 and the L2 cache 33.

For example, a bit that represents one of "Modified (M)", "Exclusive (E)", "Shared (S)", and "Invalid (I)" is stored in the L1 cache state and the L2 cache state. Here, "Modified" represents a state in which any one CPU caches data, and the cached data has been updated. In addition, in a case where the state of the cached data is "Modified", writing back needs to be performed.

"Exclusive" represents a state in which any, and only, one CPU owns and caches data, and the cached data has not been updated. The "Shared" represents a state in which a plurality of CPUs cache data, and the cached data has not been updated. In addition, "Invalid" represents a state in which the state of the cache has not been registered.

The directory manages CK bits of two bits, PRC of 63 bits, and UE of 4 bits. Here, the CK bits represent information in which the state of the cached data is coded. The PRC is information that represents the position of a CPU that has cached data of a corresponding cache line as a bit map. The UE is information that represents the abnormality of the directory and factors thereof.

The cache directory managing unit 36 identifies a CPU that has cached data stored at the acquired physical address, the state of the cached data, and the like. Then, the cache directory managing unit 36 performs a process of updating the data stored in the memory by issuing a flush request and the like based on the state of the cached data so as to maintain the coherence between the cached data and the data stored in the memory. Thereafter, the cache directory managing unit 36 outputs the data to the request source.

Here, an example of the process of maintaining the cache coherence using the cache directory managing unit 36 will be described. For example, the cache directory managing unit 36 instructs the request generating unit 38 to transmit a command for instructing a CPU that has cached data of which the state is Modified (M) to perform writing back. Then, the cache directory managing unit 36 updates the state of the data and performs a process according to the state after update. The types of requests and commands that are transmitted or received by the cache directory managing unit 36 will be described later.

In a case where a physical address and a CPUID are acquired from the cache directory managing unit 36, the request generating unit 38 generates a packet in which the physical address and the CPUID that have been acquired are stored, in other words, a packet that is a memory accessing request. Then, the request generating unit 38 transmits the generated packet to the router 40.

Here, FIG. 11B is a diagram that illustrates a packet that is transmitted by a CPU according to First Embodiment. In the example illustrated in FIG. 11B, the physical address is denoted by PA. In the example illustrated in FIG. 11B, the request generating unit 38 generates a request in which a CPUID, a physical address, and data representing the content of the request are stored and outputs the generated request to the router 40. In such a case, the router 40 outputs the request generated by the request generating unit 38 to the XB 2 through the XB connecting unit 27. Then, the XB 2 transmits the request to the CPU that is represented by the CPUID stored in the request.

In a case where an instruction for issuing a request or a command that is used for maintaining the coherency is received from the cache directory managing unit 36, the request generating unit 38 generates the request or the command according to the instruction. Then, the request generating unit 38 transmits the request or the command that has been generated to the CPU according to the instruction through the router 40, the XB connecting unit 27, and the XB 2. In addition, in a case where data is to be acquired from the I/O device, the request generating unit 38 outputs an access request for the I/O to the router 40.

Referring back to FIG. 7, when receiving a packet output by another CPU through the XB 2, the XB connecting unit 27, and the router 40, the request receiving unit 39 acquires a physical address that is included in the received packet. Then, the request receiving unit 39 outputs the acquired physical address to the cache directory managing unit 36. In addition, in a case where data transmitted from another CPU is received, the request receiving unit 39 outputs the received data to the cache directory managing unit 36.

In addition, in a case where a request or a command used for maintaining the coherency is received, the request receiving unit 39 outputs the request or the command that has been received to the cache directory managing unit 36. Furthermore, in a case where a reply for an I/O accessing request or data is received from the router 40, the request receiving unit 39 outputs the reply or the data that has been received to the cache directory managing unit 36. In such a case, the cache directory managing unit 36, for example, performs a process of outputting the acquired data to the memory accessing unit 41 so as to be stored in the memory 22.

In a case where the packet that is output by the request generating unit 38 included in the packet control unit 37 is received, the router 40 outputs the received request to the XB connecting unit 27. In addition, the router 40 outputs the packet or the data transmitted by another CPU to the request receiving unit 39 through the XB connecting unit 27. Furthermore, the router 40 outputs the packet that is output by the packet control unit 37 to the I/O or the like to the PCIe control unit 42. In addition, in a case where the reply or the like transmitted from the I/O is received from the PCIe control unit 42, the router 40 outputs the reply or the like that has been received to the packet control unit 37.

The memory accessing unit 41 is a so-called memory access controller (MAC) and controls an access to the memory 22. For example, in a case where a physical address is received from the cache directory managing unit 36, the memory accessing unit 41 acquires data stored at the received physical address from the memory 22 and outputs the acquired data to the cache directory managing unit 36. The memory accessing unit 41 may form the shared area to be redundant by using a memory mirroring function.

In a case where an I/O access request is acquired through the router 40, the request generating unit 43 that is included in the PCIe control unit 42 generates a request to be transmitted to the I/O device that is the target of the access request and outputs the generated request to the PCIe bus control unit 44. In a case where the request generated by the request generating unit 43 is acquired, the PCIe bus control unit 44 transmits the request to the I/O device through the PCIe connecting unit 28.

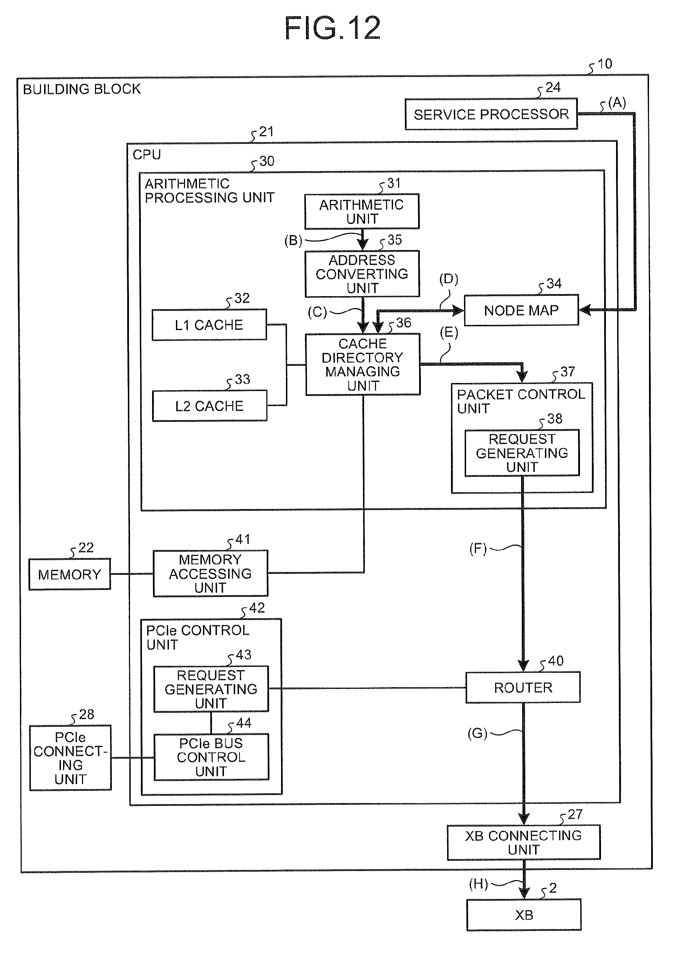

Next, an example of the process of the CPU 21 transmitting a request to another CPU will be described with reference to FIG. 12. FIG. 12 is a diagram that illustrates an example of the process of the CPU according to First Embodiment transmitting a request. For example, as denoted by (A) in FIG. 12, an entry is set from the service processor 24 to the node map 34, in which the CPUID of a CPU accessing a memory to which the physical address is allocated and the physical address are associated with each other.

In addition, the arithmetic unit 31 performs an arithmetic process, and, as denoted by (B) in FIG. 12, outputs a logical address that is an access target to the address converting unit 35. Then, the address converting unit 35 converts the logical address into a physical address and outputs the converted physical address, as denoted by (C) in FIG. 12, to the cache directory managing unit 36.

Here, when the physical address is acquired from the address converting unit 35, the cache directory managing unit 36, as denoted by (D) in FIG. 12, acquires a CPUID that is associated with the acquired physical address by referring to the node map 34. Then, in a case where the acquired CPUID is not the CPUID of the CPU 21, the cache directory managing unit 36, as denoted by (E) in FIG. 12, outputs the acquired CPUID and the physical address to the packet control unit 37.

Even in such a case, the request generating unit 38 generates a packet in which the physical address acquired from the cache directory managing unit 36 and the CPUID are stored and, as denoted by (F) in FIG. 12, outputs the generated packet to the router 40. Then, as denoted by (G) in FIG. 12, the router 40 outputs the packet acquired from the request generating unit 38 to the XB connecting unit 27. Thereafter, as denoted by (H) in FIG. 12, the XB connecting unit 27 outputs the acquired packet to the XB 2. Then, the XB 2 delivers the packet to a CPU that is represented by the CPUID stored in the packet.

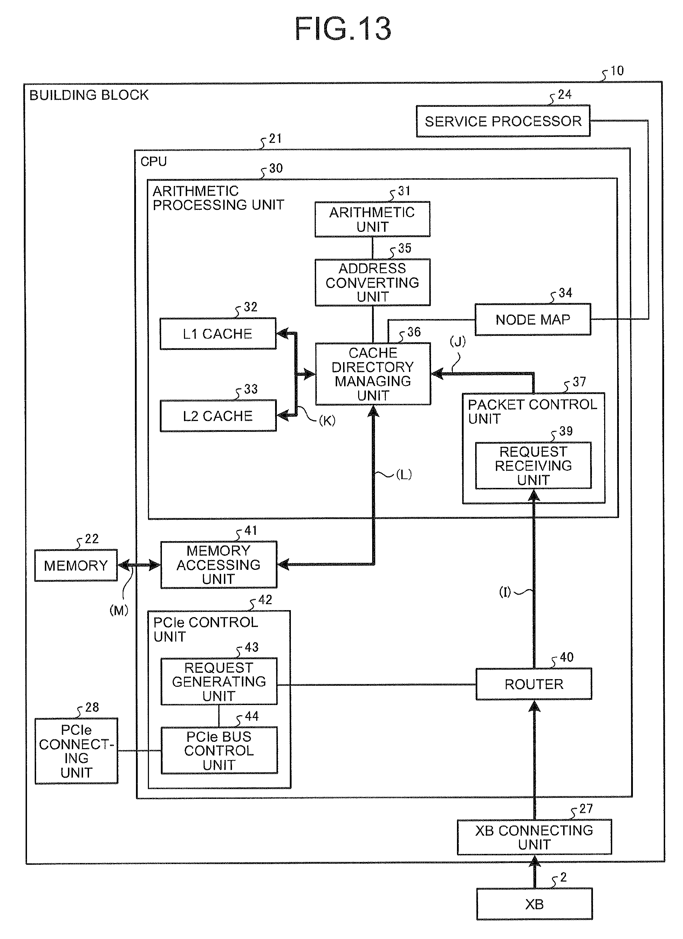

Next, an example of the process that is performed when the CPU 21 receives a packet from another CPU will be described with reference to FIG. 13. FIG. 13 is a diagram that illustrates an example of the process that is performed when the CPU according to First Embodiment receives a packet. For example, as denoted by (I) in FIG. 13, the request receiving unit 39 receives a packet from another CPU, in which the CPUID of the CPU 21 and a physical address allocated to the memory 22 are stored.

In such a case, the request receiving unit 39 acquires a physical address from the received packet and, as denoted by (J) in FIG. 13, outputs the acquired physical address to the cache directory managing unit 36. Then, the cache directory managing unit 36 determines whether bit 46 of the acquired physical address is "0" or "1".

In other words, in a case where the information processing system 1, as illustrated in FIGS. 3 and 4, sets physical addresses that are allocated to the shared area and the local area, the cache directory managing unit 36 does not need to identify all the bits of the physical address. In other words, by determining whether bit 46 is "0" or "1" using the cache directory managing unit 36, it can be accurately determined whether a storage area represented by the physical address is the shared area or the local area.

In a case where bit 46 of the received physical address is "1", the cache directory managing unit 36 determines an access to the shared area. In such a case, the cache directory managing unit 36, as denoted by (K) in FIG. 13, determines whether data stored in the storage area represented by the physical address is cached in the L1 cache 32 and the L2 cache 33.

In addition, in a case where data is determined not to have been cached, the cache directory managing unit 36, as denoted by (L) in FIG. 13, outputs the physical address to the memory accessing unit 41. Then, as denoted by (M) in FIG. 13, the memory accessing unit 41 acquires the data stored in the storage area that is represented by the physical address from the memory 22 and outputs the acquired data to the cache directory managing unit 36.

Then, in a case where the data is acquired from the L1 cache 32, the L2 cache 33, or the memory accessing unit 41, the cache directory managing unit 36 outputs the acquired data to the packet control unit 37 and instructs the packet control unit 37 to transmit the acquired data to the CPU that is the request source.

For example, the CPUs 21 to 21c, the communication unit 23, the service processor 24, the control unit 25, the communication unit 26, the XB connecting unit 27, and the PCIe connecting unit 28 are electronic circuits. In addition, the arithmetic unit 31, the address converting unit 35, the cache directory managing unit 36, the packet control unit 37, the request generating unit 38, and the request receiving unit 39 are electronic circuits.

Furthermore, the router 40, the memory accessing unit 41, the PCIe control unit 42, the request generating unit 43, and the PCIe bus control unit 44 are electronic circuits. Here, as an example of the electronic circuits, an integrated circuit such as an application specific integrated circuit (ASIC) or a field programmable gate array (FPGA), a central processing unit (CPU), a micro processing unit (MPU), or the like is used.

In addition, the memories 22 to 22a are semiconductor memory devices such as random access memory (RAM), read only memory (ROM), flash memory, and the like. Furthermore, the L1 cache 32 and the L2 cache 33 are high-speed semiconductor memory devices such as static random access memory (SRAM).

Next, the process of maintaining the cache coherence using the CPUs 21 to 21c will be briefly described. In description presented below, it is assumed that each CPU of the information processing system 1 maintains the cache coherence by using an Illinois protocol.

In addition, in the description presented below, each memory included in the information processing system 1 is assumed to be identified as a memory having a cacheable space by all the CPUs. Furthermore, in the description presented below, a CPU that is physically directly connected to a memory that stores data, which is a target of access, through the MAC provided inside the CPU will be referred to as a home CPU, and a CPU that requests for accessing will be referred to as a local CPU.

Furthermore, a CPU that has already transmitted a request to the home CPU and has completed caching the data will be referred to as a remote CPU. In addition, there are cases where the local CPU and the home CPU are the same CPU, and there are cases where the local CPU and the remote CPU are the same CPU.

For example, the local CPU determines that the physical address, which is the access target, is allocated to a memory that the home CPU accesses by referring to a node map thereof. Then, the local CPU issues a request in which the physical address is stored to the home CPU. In addition, as requests issued by the local CPU, there are a plurality of types of requests. Accordingly, the cache directory managing unit that is included in the home CPU performs a cache coherence control process according to the type of the acquired request.

For example, as the types of requests that are issued by the local CPU, there are a share-type fetch access, a exclusive-type fetch access, a cache invalidating request, a cache replacing request, and the like. The share-type fetch access is a request for executing "MoveIn to Share" and is a request that is issued when data is read out from a memory that is accessed by the home CPU.

In addition, the exclusive-type fetch access, for example, is a request for executing "MoveIn Exclusively" and is issued when data is loaded in to a cache at the time of storing data in the memory that is accessed by the home CPU. The cache invalidating request, for example, is a request for executing "MoveOut" and is issued when a request is made for the home CPU to invalidate a cache line. When the cache invalidating request is received, there is a case where the home CPU issues a cache invalidating request to the remote CPU or a case where the home CPU issues a command used for invalidating the cache.

A cache replacing request, for example, is a request for executing "WriteBack" and is issued when updated cache data, in other words, cache data that is in the Modified state is written back to the memory that is accessed by the home CPU. In addition, the cache replacing request, for example, is a request for executing "FlushBack" and is issued when cache data that has not been updated, in other words, the cache that is in the Shared or Exclusive state is discarded.

In a case where the above-described request is received from the local CPU, in order to process the request, the home CPU issues a command to the local CPU or the remote CPU. Here, in order to perform a cache coherence control process according to the type of the acquired request, the home CPU issues a plurality of types of commands. For example, the home CPU issues "MoveOut and Bypass to Share" so as to load data cached by the remote CPU to the local CPU.

In addition, for example, the home CPU invalidates the caches of all the remote CPUs other than the local CPU, and thereafter the home CPU issues "MoveOut and Bypass Exclusively" so as to transmit data to the local CPU. Furthermore, the home CPU issues "MoveOut WITH Invalidation" that requests the remote CPU to invalidate the cache. In a case where the home CPU issues the "MoveOut WITH Invalidation", the caches of all the CPUs are in the invalid state for a target address.

In addition, the home CPU issues "MoveOut for Flush" that requests the remote CPU to invalidate the cache line. In a case where the home CPU issues "MoveOut for Flush", a state is formed in which target data is cached only by the home CPU. In addition, in a case where the state of the target data is "Shared", the home CPU issues "Buffer Invalidation" that requests the remote CPU to discard the cache.

The home CPU transits the state of the data cached by each CPU by issuing the above-described command in accordance with the type of the request. In addition, in a case where a command is received, the local CPU or the remote CPU performs a process represented by the command and transits the state of the data cached thereby.

Thereafter, the local CPU or the remote CPU transmits a reply of completion of the command or a reply of completion of the addition of data to the home CPU. In addition, after executing the command process, the home CPU or the remote CPU transmits a reply of requesting the addition of data to the local CPU.

### Flow of Processing of CPU

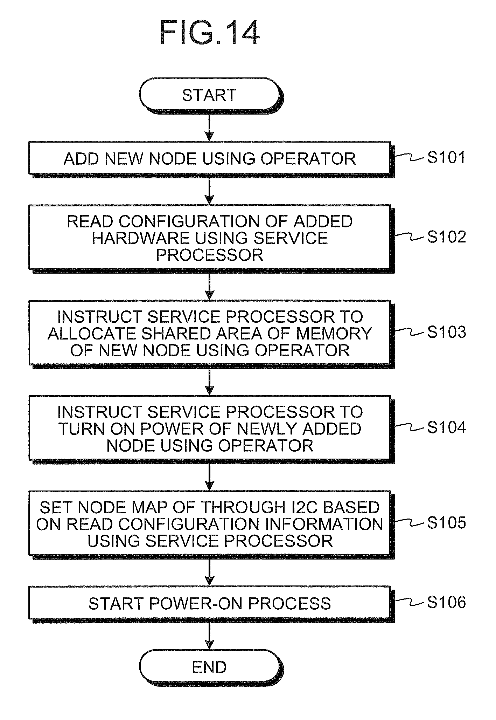

Next, the flow of a process for setting the node map 34 included in each CPU in the information processing system 1 will be described with reference to FIG. 14. FIG. 14 is a flowchart that illustrates the flow of a node map setting process. In description presented below, a set of one CPU and a memory accessed by the CPU will be referred to as a node. In addition, in the description presented below, an example will be described in which a new node is added to the information processing system 1.

First, an operator of the information processing system 1 adds a new node in Step S101. Next, the service processors of the building blocks 10 to 10e read the configuration of the hardware of the added node in S102. Next, the operator of the information processing system 1 instructs the service processors to allocate a shared area of the memory included in the new node in Step S103.

Next, the operator of the information processing system 1 instructs the service processor of the new node to input power in Sep S104. Then, the service processors of the building blocks 10 to 10e set the node maps 34 of the CPUs included in the building blocks 10 to 10e based on information of the read configuration using the I2C in Step S105. Thereafter, the information processing system 1 inputs power to the building blocks 10 to 10e in Step S106 and ends the process.

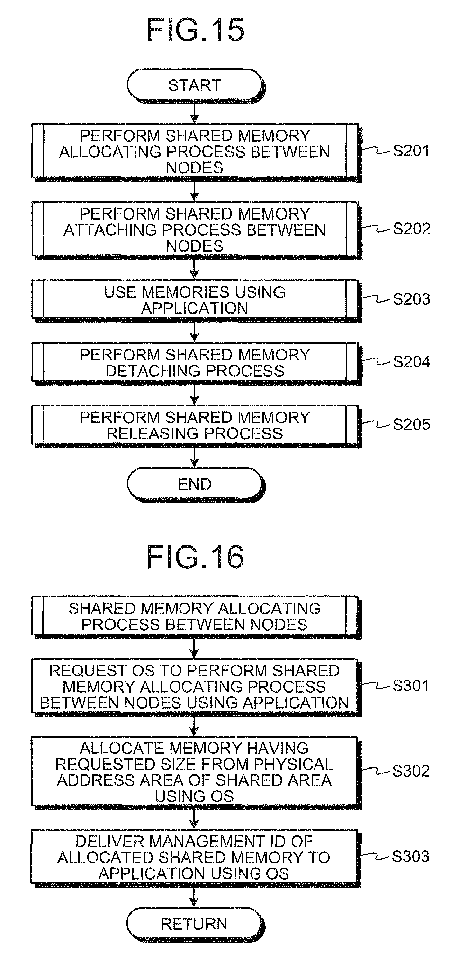

Next, the flow of a process of controlling the shared area using the information processing system 1 will be described with reference to FIG. 15. FIG. 15 is a flowchart that illustrates the flow of a shared area controlling process. First, the information processing system 1 performs a process of allocating a shared memory between nodes in accordance with a request from an application in Step S201. Next, the information processing system 1 performs a process of attaching the shared memory that is shared among the nodes in Step S202.

Thereafter, applications executed by the CPUs included in the information processing system 1 use memories in Step S203. Next, the information processing system 1 performs a shared memory detaching process in Step S204. Thereafter, the information processing system 1 performs a shared memory releasing process in Step S205 and ends the process. In addition, the process of Steps S201 and S205 may be performed only by an application running on the home node of the shared memory, or, while the nothing will be actually executed, applications running on nodes other than the home node of the shared memory may be also performed.

Next, the flow of the shared memory allocating process represented in Step S201 in FIG. 15 will be described with reference to FIG. 16. FIG. 16 is a flowchart that illustrates the shared memory allocating process. In the example illustrated in FIG. 16, for example, an application executed by the CPU 21 requests the OS to perform the process of allocating a shared memory between nodes in Step S301.

Then, the OS executed by the CPU 21 allocates a memory having a requested size from an area of physical addresses used for the shared area in Step S302. Next, the OS delivers a management ID of a shared memory allocated by the OS to the application in Step S303 and ends the shared memory allocating process.

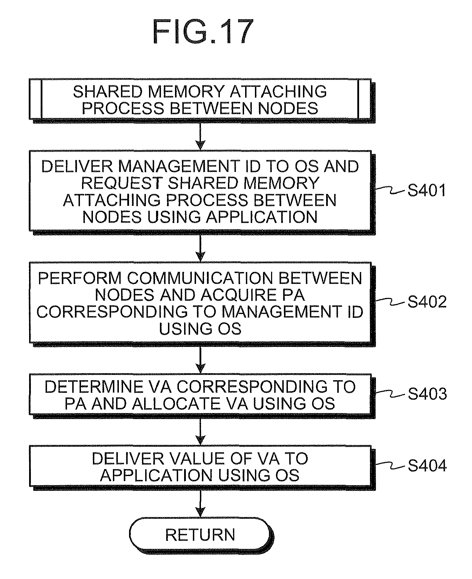

Next, the flow of a process of attaching a shared memory between nodes, which is illustrated in Step S202 in FIG. 15, will be described with reference to FIG. 17. FIG. 17 is a flowchart that illustrates the shared memory attaching process. First, an application delivers a management ID to the OS and requests the process of attaching a shared memory between nodes in Step S401. In such a case, the OS communicates with operating systems that are executed at the other nodes and acquires a physical address that corresponds to the management ID in Step S402.

Here, in a case where the OS communicates with operating systems executed at the other nodes, communication through a local area network (LAN) or the like, communication between nodes through the service processors 24, or the like is used. For example, it may be configured such that the OS executed at each node sets a specific shared area as an area used for communication between nodes, and communication is performed by storing or reading information in or from the set area.

Next, the OS determines a logical address (virtual address) that corresponds to the physical address and performs allocation thereof in Step S403. For example, the OS that is executed by the CPU 21 sets the TLB of the physical address and the logical address by using the address converting unit 35.

In addition, the logical addresses used by the CPUs 21 to 21c may be in an overlapping range or may be in a mutually-different range for each CPU. Furthermore, the logical addresses used by the CPUs 21 to 21c may be designated by the application in the OS. Thereafter, the OS delivers the value of the logical address to the application in Step S404 and ends the process.

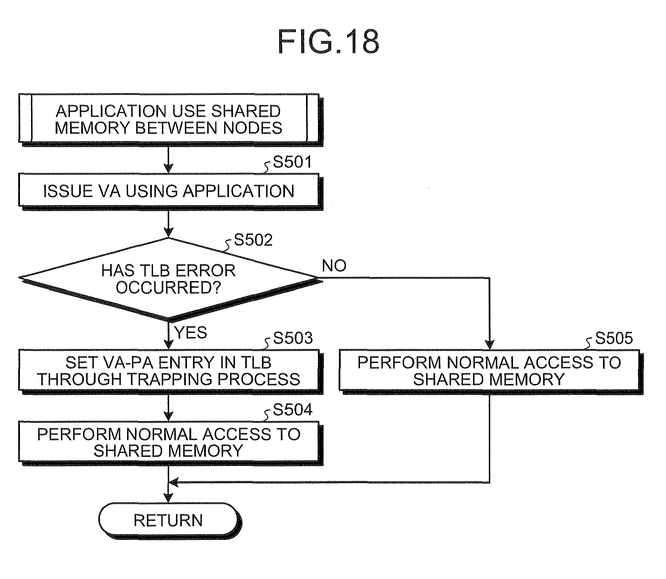

Next, the flow of a process of an application for using a shared memory between nodes, which is illustrated in Step S203 in FIG. 15, will be described with reference to FIG. 18. FIG. 18 is a flowchart that illustrates a process of an application for using a shared memory. For example, the application executed by the CPU 21 issues a logical address and accesses a storage area that is represented by the logical address in Step S501.

Then, the CPU 21 determines whether or not a TLB miss occurs in Step S502. In a case where a TLB miss occurs (Yes in Step S502), the CPU 21 performs a trap handling process and sets an entry of a set of a logical address and a physical address in the TLB in Step S503.

Next, the application issues a logical address again and normally accesses the shared memory through conversion of the logical address into a physical address using the TLB in Step S504. On the other hand, in a case where a TLB miss does not occur (No in Step S502), an access to the shared memory is performed normally in Step S505, and the process ends.

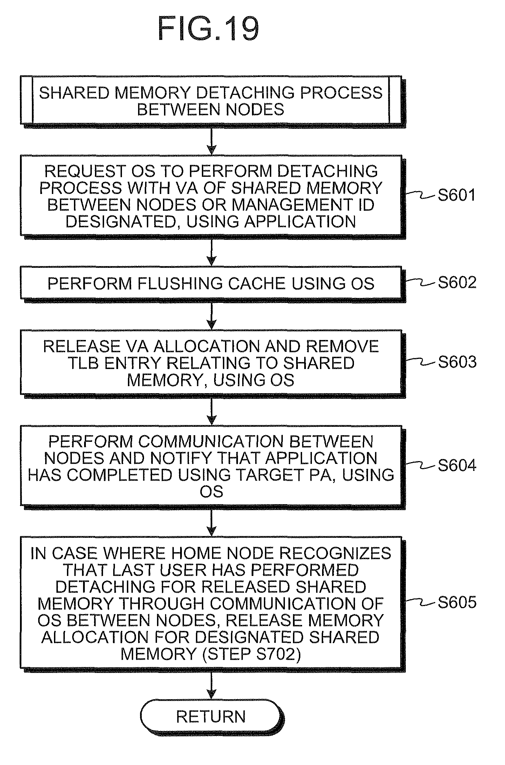

Next, the flow of a process of detaching a shared memory between nodes, which is illustrated in Step S204 in FIG. 15, will be described with reference to FIG. 19. FIG. 19 is a flowchart that illustrates the process of detaching the shared memory between nodes. For example, the application executed by the CPU 21 requests the OS to perform the detaching process with a logical address of the shared memory between nodes or a management ID designated in Step S601.

Then, the OS executed by the CPU 21 flushes the cache in Step S602. In other words, in a case where allocation is made again as a shared memory after releasing the allocation of the shared memory, in a case where a CPU that is on the home node of the shared memory reboots while allocation of the shared memory is not made, there is concern that the cache and the actual memory state are not matching with each other. Accordingly, the OS flushes the cache, thereby preventing a state in which the cache and the actual memory state do not match with each other.

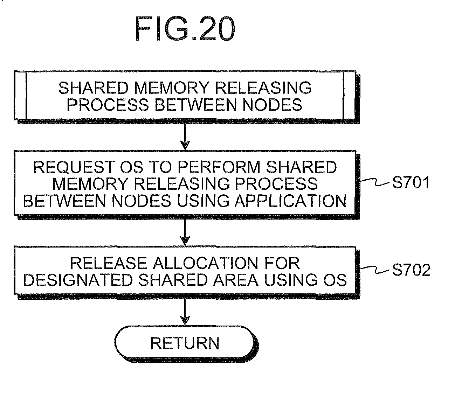

Then, the OS releases the allocation of the shared memory between nodes, in other words, the allocation of the logical addresses in a range used by the application and removes the entry of the TLB relating to the released logical addresses in Step S603. In addition, the OS performs communication between nodes, thereby notifying that the application has completed the use of the target PA in Step S604. Then, in a case where the home node recognizes that the last user detaches the shared memory that has been released through communication between nodes, the OS releases the memory allocation for a designated shared memory in Step S605. In addition, the process of Step S605 relates to the process of Step S702 illustrated in FIG. 20.

After Step S603, even in a case where a TLB miss (Yes in Step S502) occurs for the memory address that has been detached at the node, the OS does not set a physical address corresponding to the logical address that has been released in the TLB. In such a case, the process of Step S504 does not normally ends, but an access error occurs.

In addition, after the completion of the detachment, to the contrary to Step S402, the OS performs communication between nodes, thereby notifying that the application has completed the access to the PA of the shared memory. In a case where the application corresponds to the last user of the shared memory in the state in which the shared memory has been released at the home node the home node is requested to perform a releasing process.

Next, the flow of the process of releasing the shared memory between nodes that is represented in Step S205 in FIG. 15 will be described with reference to FIG. 20. FIG. 20 is a flowchart that illustrates the process of releasing a shared memory between nodes. For example, an application that is executed by the CPU 21 requests the OS to perform the process of releasing a shared memory between nodes in Step S701. Then, in a case where all the users of the designated shared area are detached, the OS releases the allocation in Step S702 and ends the process. In a case where the detachment has not been completed, the process ends without performing the allocation releasing process. The actual process of completing the allocation is performed in Step S605.

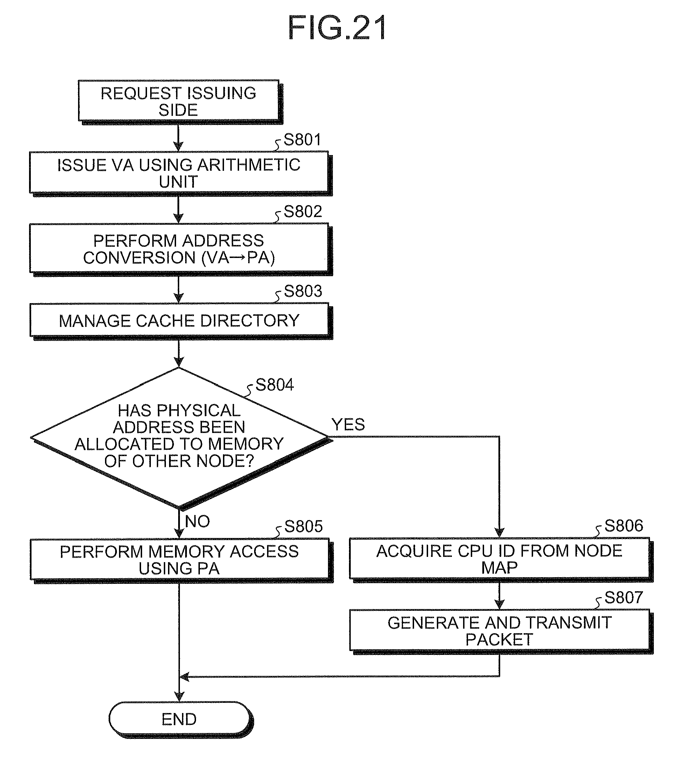

Next, the flow of a process will be described with reference to FIG. 21 in which the CPU 21 transmits a memory accessing request to the other CPUs. FIG. 21 is a flowchart that illustrates the flow of a request issuing process. For example, the arithmetic unit of the CPU 21 issues a logical address in Step S801.

Then, the address converting unit 35 converts the logical address into a physical address in Step S802. Next, the cache directory managing unit 36 acquires the physical address and manages the cache directory in Step S803. In other words, the cache directory managing unit 36 transits the cache state of the storage area that is represented by the acquired physical address.

Next, the cache directory managing unit 36 determines whether or not the acquired physical address is a physical address that is allocated to any other node by referring to the node map 34 in Step S804. In a case where the acquired physical address is determined not to be a physical address that is allocated to a memory located at any other node (No in Step S804), the cache directory managing unit 36 performs a memory access using the acquired physical address in Step S805.

On the other hand, in a case where the acquired physical address is a physical address that is allocated to a memory located at any other node (Yes in Step S804), the cache directory managing unit 36 acquires a CPUID that is associated with the physical address from the node map 34 in Step S806. Then, the packet transmitting unit generates a packet in which the CPUID and the physical address are stored, in other words, a memory accessing request, transmits the memory accessing request to the XB 2 in Step S807, and ends the process.

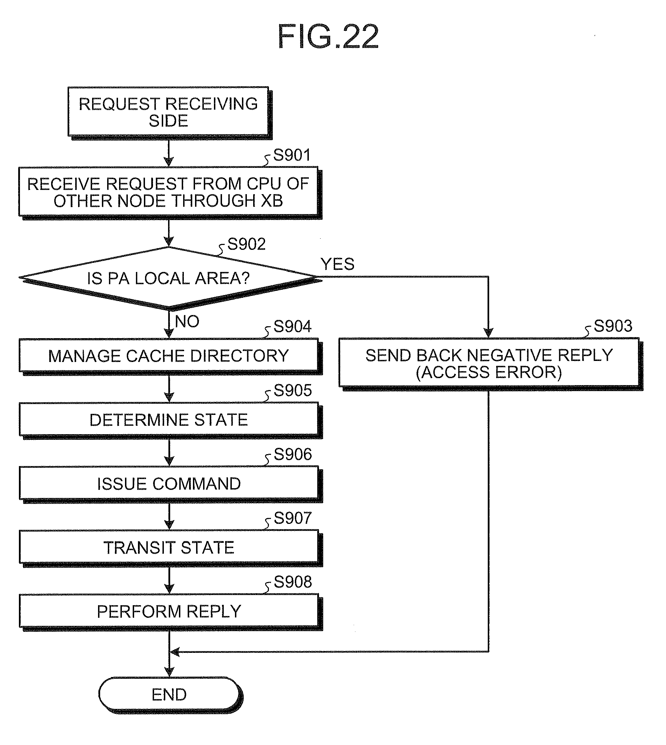

Next, the flow of a process that is performed when the CPU 21 receives a memory accessing request from any other CPU will be described with reference to FIG. 22. FIG. 22 is a flowchart that illustrates the flow of the process that is performed when the request is received. In the example illustrated in FIG. 22, the flow of the process will be described which is performed when the CPU 21 receives "MoveIn to Share" or "MoveIn Exclusively" from any other CPU. For example, the CPU 21 receives a request from any other CPU through the XB 2 in Step S901.

In such a case, the CPU 21 determines whether or not a predetermined bit of the physical address that is a target of the request is "1", thereby determining whether or not the physical address that is the target of the request corresponds to a local area in Step S902. In a case where the physical address that is the target of the request is determined to be in correspondence with the local area (Yes in Step S902), the CPU 21 sends back a negative reply to the CPU that is the request source in Step S903 and ends the process.

On the other hand, in a case where the physical address that is the target of the request does not correspond to the local area (No in Step S902), the CPU 21 manages the cache directory for maintaining the coherence in Step S904. In addition, the CPU 21 determines the state of the storage area that is represented by the physical address in Step S905.

Then, the CPU 21 issues a command according to the determined state to the other CPU in Step S906 and transits the state in Step S907. Thereafter, the CPU 21 transmits data that is stored in the storage area represented by the physical address to the CPU of the request source as a reply in Step S908 and ends the process.

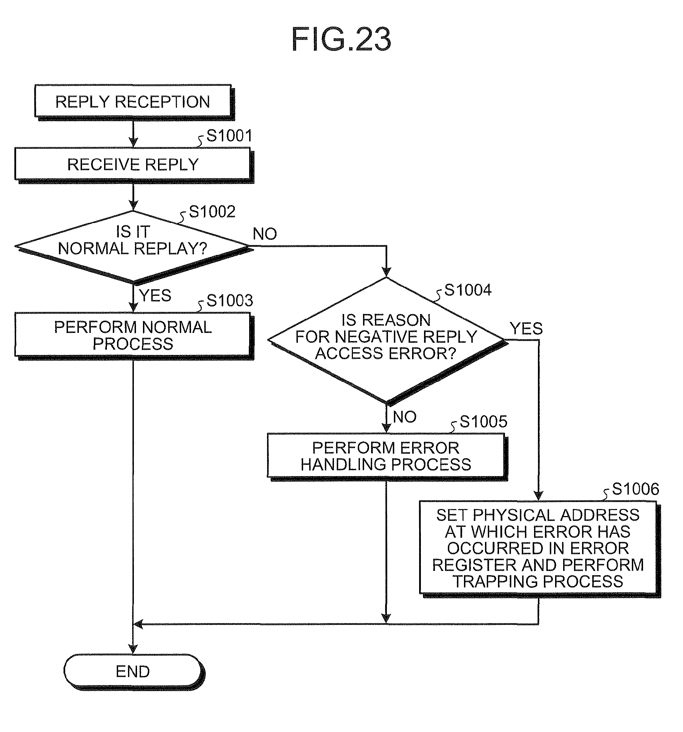

Next, the flow of a process that is performed when the CPU 21 receives a reply will be described with reference to FIG. 23. FIG. 23 is a flowchart that illustrates the flow of the process that is performed when the CPU receives a reply. For example, the CPU 21 receives a reply in Step S1001. In such a case, the CPU 21 determines whether or not the content of the reply is normal in Step S1002.

In a case where the content of the reply is normal, in other words, in a case where data that is the target of the request is received (Yes in Step S1002), the CPU 21 performs a normal process using the data in Step S1003 and ends the process. On the other hand, in a case where a negative reply is received (No in Step S1002), the CPU 21 determines whether or not the reason for the negative reply is an access error in Step S1004.

In a case where the reason for the negative reply is not an access error (No in Step S1004), the CPU 21 performs normal error handling in Step S1005 and ends the process. On the other hand, in a case where the reason for the negative reply is not an access error (Yes in Step S1004), the CPU 21 sets the physical address at which the error occurs in an error register, performs a trapping process in Step S1006, and ends the process.

### Advantage of First Embodiment

As described above, the information processing system 1 includes the CPUs 21 to 21c, the memories 22 to 22c, and the XB 2 that connects the CPUs 21 to 21c to each other. In addition, the CPU 21 includes the address converting unit that is used for conversion between a logical address and a physical address and the node map 34 that is used for conversion between a physical address and a CPUID.

The CPU 21 transmits a request packet that includes a physical address and a CPUID. In addition, in a case where a request packet is received from another CPU, the CPU 21 determines whether a storage area, which is an access target, is the shared area or the local area based on the physical address that is stored in the received packet.

In this way, the information processing system 1 can efficiently access the shared memory between nodes using a small amount of hardware. In other words, in the information processing system 1, since the CPU 21 performs address conversion using the node map 34 that is used for performing conversion between the physical address and the CPUID, memory accesses can be efficiently performed.

In addition, in a case where the CPU 21 accesses the shared area of a memory accessed by another CPU, the CPU 21 may transmit the packet in which a physical address and a CPUID are stored only to the XB 2. Accordingly, the information processing system 1 can efficiently perform memory accesses.

Furthermore, in a case where the CPU 21 receives a request packet from another CPU, the information processing system 1 determines whether a storage area, which is an access target, is the shared area or the local area based on the physical address that is stored in the received packet. Accordingly, the information processing system 1 can maintain the security level of the kernel data and the user data stored in the local area to be high. In addition, since the information processing system 1 configures all the memories to be cacheable, a delay time in memory accessing can be easily covered up.

The CPU 21 accesses the shared area of the memory accessed by another CPU using a method similar to that used for accessing the memory 22. In other words, even in a case where the storage area, which is an access target, is present in the memory 22 or another memory, the arithmetic unit 31 included in the CPU 21 may output only the logical address.

Accordingly, even in a case where a process, programming, or the like of exclusively controlling the I/O or the like is not performed, the information processing system 1 can easily access the shared area, and accordingly, the performance of memory accesses can be improved. In addition, even in a case where a program or an OS that is executed is not modified, the CPU 21 can appropriately use the shared memory, and, as a result, a prefetching process can be performed similarly to a general case, whereby the performance of memory accesses can be improved.

In addition, the information processing system 1 allocates physical addresses of which a predetermined bit is "1" to the shared area and allocates physical addresses of which the predetermined bit is "0" to the local area. Accordingly, only by determining whether or not the predetermined one bit of the physical address is "1", the CPU 21 can easily determine whether or not a physical address, which is an access target, is a physical address of the shared area. As a result, the information processing system 1 can perform efficient memory accesses.

On the other hand, in a case where the target of a memory access from another CPU is determined as an access to the local area, the CPU 21 sends back a negative reply. Accordingly, the information processing system 1 prevents an access to an area other than the shared area, whereby an error can be prevented.

In addition, the cache directory managing unit 36 converts a physical address into a CPUID that is stored in the node map 34 in association therewith using the node map 34. Accordingly, the CPU 21 can identify a CPU that accesses a memory to which a physical address that is an access target is allocated.

Furthermore, each one of the building blocks 10 to 10e includes a service processor that rewrites the node map 34. Accordingly, the information processing system 1 can freely allocate a local area and a shared area to each one of the memories 22 to 22c. For example, in a case where the memory 22 has a capacity of 4 TB, the information processing system 1 can configure a storage area having an arbitrary capacity to be shared between nodes, like a case in which 1 TB is allocated to the local area, and 3 TB is allocate to the share area.

In addition, even in a case where a new CPU and a new memory are added, or a CPU or a memory is removed, the information processing system 1 can allocate the local area and the shared area in an easy manner through the service processor.

Furthermore, the CPU 21 controls the cache coherence by using a directory that manages CPUs caching data stored in the memory 22. Accordingly, even in a case where the number of CPUs included in the information processing system 1 increases, the information processing system 1 can efficiently maintain the cache coherence without increasing the traffic of the XB 2.

More specifically, in the information processing system 1, communication between CPUs is limited to that among a remote CPU and a home CPU or a remote CPU, a home CPU, and a local CPU that caches updated data. Accordingly, the information processing system 1 can efficiently maintain the cache coherence.

In addition, in a case where a cache miss occurs, the CPU 21 determines whether or not the physical address at which the cache miss occurs is a physical address that is allocated to a memory accessed by another CPU. In a case where the physical address at which the cache miss occurs is determined to be a physical address that is allocated to a memory accessed by another CPU, the CPU 21 converts the physical address into a CPUID, generates a packet in which the physical address and the CPUID are stored, and transmits the generated packet. Accordingly, the CPU 21 can access a memory without performing a surplus address converting process.

Furthermore, in a case where an executed application requests for the acquisition of a shared area, the CPU 21 sets a TLB that is used for performing conversion between a logical address used by the application and a physical address allocated to the shared area. Accordingly, the CPU 21 can access a memory without modifying the executed application or the OS in consideration of the access to the shared area or the local area.

### [b] Second Embodiment

Until now, although an embodiment of the present invention has been described, the embodiment other than the above-described embodiment may be performed in various forms. Thus, hereinafter, another embodiment that belongs to the present invention will be described as Second Embodiment.

### (1) Building Block

The above-described information processing system 1 includes the building blocks 10 to 10e each having four CPUs. However, the embodiment is not limited thereto, and each one of the building blocks 10 to 10e may have an arbitrary number of CPUs and memories accessed by each CPU. In addition, the CPU and the memory do not need to have one-to-one correspondence, and CPUs that directly access the memories may be a part of all the CPUs.

### (2) Allocation of Shared Area and Local Area

The allocation of physical addresses to the shared area and the local area described above is merely an example, and the information processing system 1 may allocate arbitrary physical addresses to each area.

For example, the information processing system 1 may allocate physical addresses of which the least significant one bit is "0" to the shared area and allocate physical addresses of which the least significant one bit is "1" to the local area. In such a case, by determining whether the least significant one bit of the physical address is "0" or "1", each CPU can easily determine whether or not the access target is the shared area.

In addition, the information processing system 1 may allocate arbitrary physical addresses that are included in a first half of the physical address space to the shared area and allocate arbitrary physical addresses that are included in a second half of the physical address space to the local area. In such a case, each CPU can easily determine whether or not an access target is the shared area by determining whether the highest one bit of the physical address is "0" or "1". Furthermore, the information processing system 1 may allocate arbitrary physical addresses that are included in a first half of the physical address space to the local area and allocate arbitrary physical addresses that are included in a second half of the physical address space to the shared area.

In other words, although the information processing system 1 may allocate arbitrary physical addresses to the shared area and the local area, by allocating physical addresses of which a predetermined bit has a same value to the shared area and allocating physical addresses of which the predetermined bit has a value different from that of the shared area, it can be easily determined whether an access target is the shared area or the local area.

### (3) Packet Transmitted by CPU

The above-described CPU 21 transmits the packet that includes a CPUID and a PA as a memory accessing request. However, the embodiment is not limited thereto. In other words, the CPU 21 may output a packet in which arbitrary information is stored as long as a CPU accessing a memory that is an access target can be uniquely identified.

In addition, for example, the CPU 21 may convert a CPUID into a virtual connection (VC) ID and store the VCID. Furthermore, the CPU 21 may store information such as a length that represents the length of data in the packet.

### (4) Command Issued by CPU

As described above, each one of the CPUs 21 to 21c maintains the cache coherence by issuing a request or a command. However, the request or the command described above is merely an example, and, for example, the CPUs 21 to 21c may issue compared and swap (CAS) commands.

As above, in a case where the CPUs 21 to 21c issue CAS commands, even when exclusive control contentions frequently occur among a plurality of CPUs, each process is performed in the cache of each CPU. As a result, the CPUs 21 to 21c can prevent a delay due to the occurrence of a memory access and can prevent congestion of transactions between the CPUs.

### (5) Control through Hypervisor

In the above-described information processing system 1, an example has been described in which an access to the address converting unit 35 that is hardware is made by the OS. However, the embodiment is not limited thereto, and, for example, a hypervisor (HPV) that operates a virtual machine may access the address converting unit 35.

In other words, at a node at which the HPV operates, the OS does not directly operate hardware resources of the CPUs 21 to 21c such as caches or MMUs but requests the hypervisor for operations. As above, in a case where control is accepted through the hypervisor, each one of the CPUs 21 to 21c converts a virtual address into a real address (RA) and, thereafter, converts the real address into a physical address.

In addition, at the node at which the HPV operates, an interrupt process does not directly interrupt the OS but interrupts the HPV. In such a case, the HPV reads out an interrupt process hander of the OS and performs the interrupt. In addition, the process that is performed by the above-described HPV is a known process that is performed for operating the virtual machine.

### (6) Process Using Partition

In the above-described information processing system 1, each one of the CPUs 21 to 21c transmits a memory access by using one node map. However, the embodiment is not limited thereto. For example, it may be configured such that the building blocks 10 to 10e operate as a plurality of node groups, and one logical partition that operates a same firmware (hypervisor) is configured for each node group.

In such a case, each one of the CPUs 21 to 21c has a node map that represents a CPU of an access destination and a node map that represents a CPU within a same logical partition. As above, since each one of the CPUs 21 to 21c has a node map that represents a CPU that is included within the same logical partition, the CPUs can identify the transmission range of special packets that are not to be transmitted beyond the logical partition such as notification of the occurrence of an error, a down request, and a reset requesting packet.

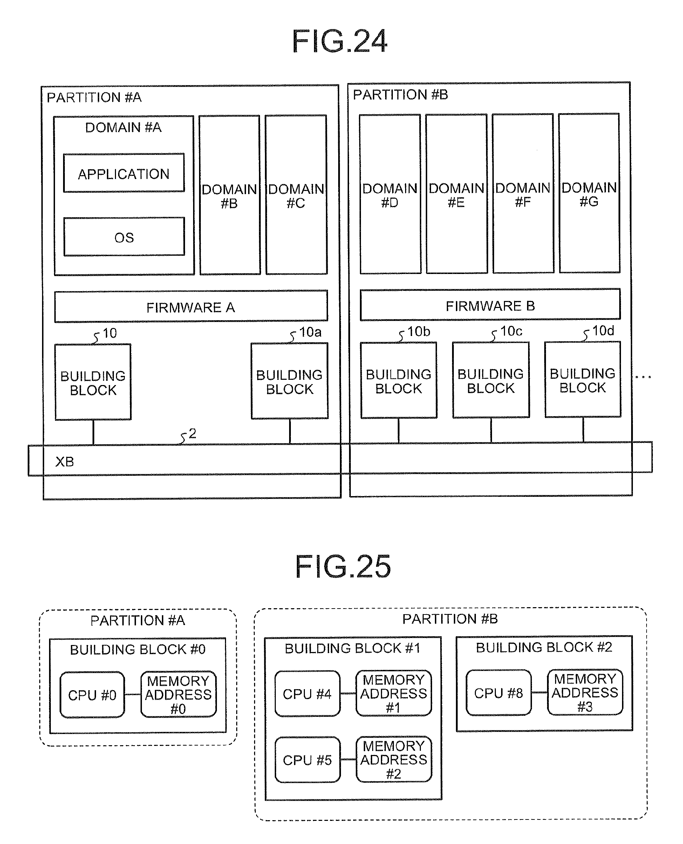

Hereinafter, a CPU that has a node map that represents CPUs that are included in the same logical partition will be described. FIG. 24 is a diagram that illustrates an information processing system according to Second Embodiment. As illustrated in FIG. 24, the building blocks 10 and 10a operate logical partition #A, and the building blocks 10b to 10d operate logical partition #B.

Here, in logical partition #A, a plurality of domains #A to #C and firmware #A operate. In addition, in logical partition #B, a plurality of domains #D to #G and firmware #B operate. Here, firmware #A and firmware #B, for example, are hypervisors. In addition, in domain #A, an application and an OS operate, and, in each one of the other domains #B to #G, similarly to domain #A, an application and an OS operate.

In other words, domains #A to #G are virtual machines in which an application and an OS independently operate, respectively. Here, while the CPUs 21 to 21c included in the building block 10 may transmit the above-described special packets to the CPUs that are included in the partition #A, the CPUs 21 to 21c are not to transmit the special packets to the CPUs that are included in partition #B.

Accordingly, the CPU of each one of the building blocks 10 to 10d has a node map that represents CPUIDs of CPUs that are included in a same logical partition. For example, the CPU 21 has a node map 34 in which a physical address and the CPUID of a CPU that is connected to a memory including a storage area represented by the physical address are stored in association with each other. In addition, the CPU 21 has a node map 34 in which the CPUIDs of CPUs that are included in the same partition as that of the CPU 21, that is, partition #A are stored. The node map 34a, similarly to the node map 34, is assumed to be set by the service processor 24.

Hereinafter, an example of a node map that represents the CPUIDs of CPUs included in a same logical partition will be described with reference to the drawing. FIG. 25 is a diagram that illustrates an example of partitions. For example, in the example illustrated in FIG. 25, partition #A includes building block #0. In addition, in building block #0, CPU #0 and address area "#0" have allocated memories.

In addition, partition #B includes building blocks #1 and #2. Here, in building block #1, CPU #4, CPU #5, and address area "#1" have allocated memories, and address area "#2" has an allocated memory. In addition, the allocated memory of address area "#1" is accessed by CPU #4, and the allocated memory of address area "#2" is accessed by CPU #5. Furthermore, in building block #2, CPU #8 and address area "#3" have allocated memories.

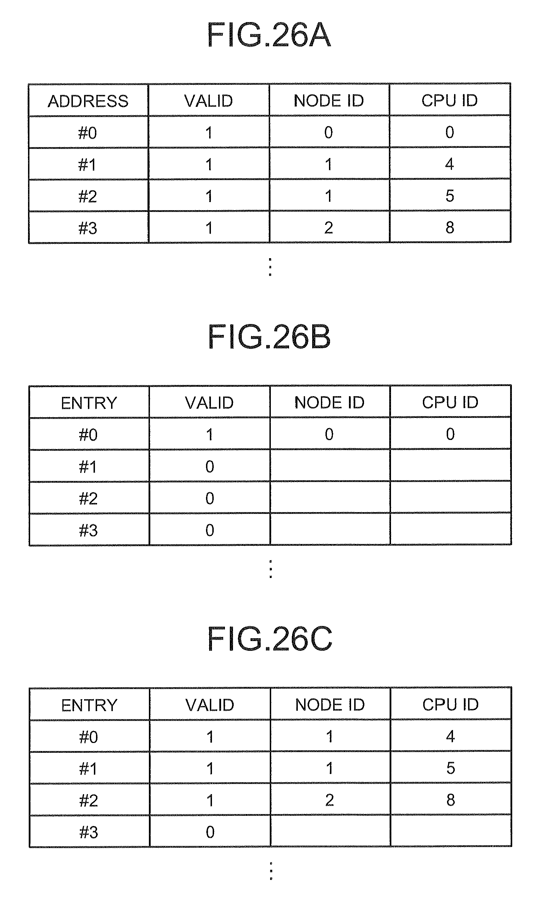

Next, the node map included in CPU #0 and the node map included in CPU #4, which are illustrated in FIG. 25, will be described with reference to FIGS. 26A to 26C. First, the node map that is stored by the CPU of partition #A will be described with reference to FIGS. 26A and 26B. FIG. 26A is a diagram that illustrates an example of the node map that is stored by the CPU of partition #A. FIG. 26B is a diagram that illustrates an example of the node map representing partition #A.

In description presented below, node ID "0" represents building block #0, node ID "1" represents building block #1, and node ID "2" represents building block #2. In addition, CPUID "0" is the CPUID of CPU #0, CPUID "4" is the CPUID of CPU #4, CPUID "5" is the CPUID of CPU #5, and CPUID "8" is the CPUID of CPU #8.

For example, in the example illustrated in FIG. 26A, the node map 34 illustrates that address area "0" is present in building block #0 and is accessed by CPU #0. In addition, the node map 34 illustrates that address area "1" is present in building block #1 and is accessed by CPU #4. Furthermore, the node map 34 illustrates that address area "2" is present in building block #1 and is accessed by CPU #5. In addition, the node map 34 illustrates that address area "3" is present in building block #2 and is accessed by CPU #8.

FIG. 26B is a diagram that illustrates an example of a node map representing partition #A. As illustrated in FIG. 26B, the node map that represents partition #A includes validity, a node ID, and a CPUID in each entry. For example, in the example illustrated in FIG. 26B, the node map represents that CPU #0 of building block #0 is included in partition #A.

For example, in the example illustrated in FIG. 25, CPU #0 includes the node maps illustrated in FIGS. 26A and 26B. In a case where a memory access is to be made, CPU #0 identifies a CPU of the access destination by using the node map represented in FIG. 26A. On the other hand, in a case where special packets are to be transmitted only to CPUs disposed within a same partition, CPU #0 identifies the CPU of the transmission destination by using the node map represented in FIG. 26B. In other words, CPU #0 transmits special packets to the CPUs disposed within partition #A represented by the node map illustrated in FIG. 26B as an example.

On the other hand, in order to make a memory access, CPU #4 includes the node maps illustrated in FIGS. 26A and 26C. Here, FIG. 26C is a diagram that illustrates an example of a node map representing partition #B. In the example illustrated in FIG. 26C, a node map that represents partition #B represents that CPUs #4 and #5 of building block #1 and CPU #8 of building block #2 are present in partition #B. CPU #4 transmits special packets to the CPUs disposed within partition #B that are represented by the node map illustrated in FIG. 26C as an example.

As above, CPUs #1 and #4 store the node map in which an address area and a CPUID are associated with each other and the node map that represents a partition. Then, CPUs #1 and #4 directly access memories included in the other nodes by using the node map in which an address area and a CPUID are associated with each other. In addition, CPU #1 transmits special packets by using a node map representing partition #A. Furthermore, CPU #4 transmits special packets by using a node map representing partition #B.

As above, each CPU may include a node map that has different values for each partition including the CPU. In a case where each CPU has the node map having a value different for each partition including the CPU, it can be prevented that a special packet is transmitted beyond the partition.

In addition, each CPU, similarly to First Embodiment, may represent an address area that is an access target by a start address and an address mask or a start address and a length. In other words, CPU #1 and CPU #4 identify nodes as access targets using the node map that represents an address area that is an access target by using the start address and the address mask or the start address and the length. In addition, CPU #1 and CPU #4 transmit special packets by using node maps that represent mutually-different partitions.

According to an embodiment, a memory access made by each arithmetic processing unit can be efficiently performed.

## Claims

1. An information processing apparatus (1) comprising:
a plurality of nodes (10 to 10e); and
an interconnect (2) that connects the plurality of nodes (10 to 10e) to each other,
wherein each of the plurality of nodes (10 to 10e) includes,
a processor (21),
a storage unit (22),
a first converting unit (35) that performs conversion between a logical address and a physical address,
a second converting unit (36) that performs conversion between the physical address and processor identification information for identifying a processor (21) included in the each of the plurality of nodes (10 to 10e),
a transmitting unit (37) that transmits transmission data including the physical address and the processor identification information for accessing a storing area indicated by the physical address,
a receiving unit (37) that receives the transmission data transmitted from another node (10 to 10e) through the interconnect (2),
the information processing apparatus being **characterized by** further comprising:
a local determining unit (36) that determines whether an access is an access to a local area of the storage unit (22) being accessible only from the node including the storage unit (22) or an access to a shared area of the storage unit (22) being accessible from the plurality of nodes (10 to 10e) based on the physical address included in the transmission data received by the receiving unit (37).

2. The information processing apparatus (1) according to claim 1, wherein
the shared area of a storage units being allocated to physical addresses of which a bit located at a predetermined position has a same value,
the local area of the storage units being allocated to physical addresses of which a bit located at the predetermined position has a value different from the value of the bit located at the predetermined position of the physical addresses allocated to the shared area, and
the local determining unit (36) determines whether an access is the access to the local area or the acess to the shared area in accordance with a value of the bit located at the predetermined position of the physical address included in the transmission data.

3. The information processing apparatus (1) according to claim 1 or 2, wherein
the local area and the shared area are allocated to all the physical addresses of storage units included in each of the plurality of nodes (10 to 10e), and
the local determining unit (36) determines whether an access is the access to the local area or the access to the shared area in accordance with a value of a most significant bit of the physical address included in the transmission data.

4. The information processing apparatus (1) according to any one of claims 1 to 3, wherein
the transmitting unit (37) transmits a negative reply indicating an access is not permitted to a node of a transmission source of the transmission data in a case where the local determining unit (36) determines that the access is the access to the local area.

5. The information processing apparatus (1) according to any one of claims 1 to 4, further comprising:
a storage device (34) that stores the processor identification information and a physical address allocated to the storage unit (22) of the node including the processor (21) represented by the processor identification information in association with each other, wherein
the second converting unit (36) converts the physical address into the processor identification information stored in the storage device (34) in association with the physical address.

6. The information processing apparatus (1) according to claim 5, further comprising:
a control device that rewrites the processor identification information and the physical address stored in the storage device (34).

7. The information processing apparatus (1) according to any one of claims 1 to 6, wherein each of the plurality of nodes (10 to 10e) includes a directory control unit that maintains identity of data cached by any of the nodes (10 to 10e) by using a directory that represents a node caching the data from the storage unit (22) included in the node.

8. The information processing apparatus (1) according to any one of claims 1 to 7, wherein each of the plurality of nodes (10 to 10e) further includes:
a cache storing unit that caches data from the storage units included in the plurality of nodes (10 to 10e); and
a determination unit (36) that determines, in a case where a cache miss occurs, whether or not the physical address at which the cache miss occurs is a physical address of the storage unit (22) included in any of the other nodes (10 to 10e), wherein
the second converting unit (36) converts the physical address into the processor identification information in a case where the determination unit (36) has determined the physical address at which the cache miss occurs is the physical address of the storage unit (22) included in any of the other nodes (10 to 10e).

9. The information processing apparatus (1) according to any one of claims 2 to 7, wherein the processer executes an operating system setting the first converting unit (35) so as to perform conversion between the logical address used by an application and the physical address allocated to the shared area, in a case where the application requests acquisition of the shared area.

10. A memory access method performed by each of a plurality of nodes (10 to 10e), the method comprising:
converting between a logical address and a physical address, and between the physical address and a processor identification information for identifying a processor (21)
included in the each of the plurality of nodes (10 to 10e);
transmitting a transmission data including the physical address and the processor identification information for accessing to a storing area indicated by the physical address;
receiving that receives the transmission data transmitted from another nodes (10 to 10e) through the interconnect (2);
the method being **characterized by**:
determining whether an access is an access to a local area of the storage unit (22) being accessible only from the node including the storage unit (22) or an access to a shared area of the storage unit (22) being accessible from the plurality of nodes (10 to 10e) based on the physical address included in the transmission data received by the receiving unit (37).

## Patentansprüche

1. Informationsverarbeitungsvorrichtung (1), umfassend:
eine Vielzahl von Knoten (10 bis 10e); und
eine Zwischenverbindung (2), mit welcher die Vielzahl von Knoten (10 bis 10e) miteinander verbunden werden,
wobei die Vielzahl von Knoten (10 bis 10e) Folgendes aufweist,
einen Prozessor (21),
eine Speichereinheit (22),
eine erste Umwandlungseinheit (35), welche die Umwandlung zwischen einer logischen Adresse und einer physikalischen Adresse durchführt,
eine zweite Umwandlungseinheit (36), welche die Umwandlung zwischen der physikalischen Adresse und Prozessoridentifikationsinformationen zum Identifizieren eines Prozessors (21) durchführt, der in jedem der Vielzahl von Knoten (10 bis 10e) enthalten ist,
eine Übertragungseinheit (37), welche Übertragungsdaten überträgt, in denen die physikalische Adresse und die Prozessoridentifikationsinformationen zum Zugreifen auf einen Speicherbereich enthalten sind, der durch die physikalische Adresse angegeben wird,
eine Empfangseinheit (37), welche die Übertragungsdaten empfängt, die von einem anderen Knoten (10 bis 10e) durch die Zwischenverbindung (2) übertragen werden,
wobei die Informationsverarbeitungsvorrichtung **dadurch gekennzeichnet ist, dass** sie des Weiteren Folgendes umfasst:
eine lokale Bestimmungseinheit (36), welche, auf der Basis der physikalischen Adresse, die in den Übertragungsdaten enthalten ist, die von der Empfangseinheit (37) empfangen werden, bestimmt, ob ein Zugang ein Zugang zu einem lokalen Bereich der Speichereinheit (22), auf den nur von dem Knoten aus zugriffen werden kann, der die Speichereinheit (22) aufweist, oder ein Zugang zu einem gemeinsam genutzten Bereich der Speichereinheit (22) ist, auf den von der Vielzahl von Knoten (10 bis 10e) zugegriffen werden kann.

2. Informationsverarbeitungsvorrichtung (1) nach Anspruch 1, wobei
der gemeinsam genutzte Bereich von Speichereinheiten, der physikalischen Adressen zugeordnet ist, von denen ein Bit, das an einer vorbestimmten Position liegt, denselben Wert hat,
der lokale Bereich der Speichereinheiten, der physikalischen Adressen zugeordnet ist, von denen ein Bit, das sich an der vorbestimmten Position befindet, einen Wert hat, der von dem Wert des Bit unterschiedlich ist, das sich an der vorbestimmten Position der physikalischen Adressen befindet, die dem gemeinsam genutzten Bereich zugeordnet ist, und
die lokale Bestimmungseinheit (36) bestimmt, ob ein Zugang der Zugang zu dem lokalen Bereich oder der Zugang zu dem gemeinsam genutzten Bereich in Übereinstimmung mit einem Wert des Bit ist, das sich an der vorbestimmten Position der physikalischen Adresse befindet, die in den Übertragungsdaten enthalten ist.

3. Informationsverarbeitungsvorrichtung (1) nach Anspruch 1 oder 2, wobei
der lokale Bereich und der gemeinsam genutzte Bereich allen physikalischen Adressen der Speichereinheiten zugeordnet sind, die in jedem der Vielzahl von Knoten (10 bis 10e) enthalten sind, und
die lokale Bestimmungseinheit (36) bestimmt, ob ein Zugang der Zugang zu dem lokalen Bereich oder der Zugang zu dem gemeinsam genutzten Bereich in Übereinstimmung mit einem Wert eines höchstwertigen Bit der physikalischen Adresse ist, die in den Übertragungsdaten enthalten ist.

4. Informationsverarbeitungsvorrichtung (1) nach irgendeinem der Ansprüche 1 bis 3, wobei
die Übertragungseinheit (37) eine negative Antwort überträgt, die angibt, dass ein Zugang einem Knoten einer Übertragungsquelle der Übertragungsdaten in dem Fall nicht ermöglicht wird, wenn die lokale Bestimmungseinheit (36) bestimmt, dass der Zugang der Zugang zu dem lokalen Bereich ist.

5. Informationsverarbeitungsvorrichtung (1) nach irgendeinem der Ansprüche 1 bis 4, des Weiteren umfassend:
eine Speichereinheit (34), welche die Prozessoridentifikationsinformationen und eine physikalische Adresse speichert, die der Speichereinheit (22) des Knotens zugeordnet sind, der den Prozessor (21) aufweist, der durch die Prozessoridentifikationsinformationen in Verbindung miteinander dargestellt wird, wobei
die zweite Umwandlungseinheit (36) die physikalische Adresse zu den Prozessoridentifikationsinformationen umwandelt, die in der Speichereinheit (34) in Verbindung mit der physikalischen Adresse gespeichert sind.

6. Informationsverarbeitungsvorrichtung (1) nach Anspruch 5, des Weiteren umfassend:
eine Steuereinheit, welche die Prozessoridentifikationsinformationen und die physikalische Adresse, die in der Speichereinheit (34) gespeichert sind, überschreibt.

7. Informationsverarbeitungsvorrichtung (1) nach irgendeinem der Ansprüche 1 bis 6, wobei jeder der Vielzahl von Knoten (10 bis 10e) eine Verzeichnis-Steuereinheit aufweist, welche die Identität von Daten aufrechterhält, die durch jeden beliebigen der Knoten (10 bis 10e) unter Verwendung eines Verzeichnisses zwischenspeichert, das einen Knoten darstellt, der die Daten aus der Speichereinheit (22) zwischenspeichert, die in dem Knoten enthalten ist.

8. Informationsverarbeitungsvorrichtung (1) nach irgendeinem der Ansprüche 1 bis 7, wobei jeder der Vielzahl von Knoten (10 bis 10e) des Weiteren Folgendes aufweist:
eine Zwischenspeichereinheit, welche Daten aus den Speichereinheiten zwischenspeichert, die in der Vielzahl von Knoten (10 bis 10e) enthalten sind; und
eine Bestimmungseinheit (36), welche in einem Fall, wenn ein Zwischenspeicher-Zugriffsfehler vorkommt, bestimmt, ob die physikalische Adresse, an welcher der Zwischenspeicher-Zugriffsfehler vorkommt, eine physikalische Adresse der Speichereinheit (22) ist oder nicht, die in jedem beliebigen der anderen Knoten (10 bis 10e) enthalten ist, wobei
die zweite Umwandlungseinheit (36) die physikalische Adresse zu den Prozessoridentifikationsinformationen in einem Fall umwandelt, wenn die Bestimmungseinheit (36) bestimmt hat, dass die physikalische Adresse, an welcher der Zwischenspeicher-Zugriffsfehler vorkommt, die physikalische Adresse der Speichereinheit (22) ist, die in jedem beliebigen der anderen Knoten (10 bis 10e) enthalten ist.

9. Informationsverarbeitungsvorrichtung (1) nach irgendeinem der Ansprüche 2 bis 7, wobei der Prozessor ein Betriebssystem ausführt, das die erste Umwandlungseinheit (35) dergestalt einstellt, dass die Umwandlung zwischen der logischen Adresse, die durch eine Anwendung verwendet wird, und der physikalischen Adresse, die dem gemeinsam genutzten Bereich zugeordnet ist, in einem Fall durchgeführt wird, wenn die Anwendung die Übernahme des gemeinsam genutzten Bereiches anfordert, .

10. Speicherzugriffsverfahren, das durch jeden einer Vielzahl von Knoten (10 bis 10e) durchgeführt wird, wobei das Verfahren Folgendes umfasst:
Umwandeln zwischen einer logischen Adresse und einer physikalischen Adresse, und zwischen der physikalischen Adresse und Prozessoridentifikationsinformationen zum Identifizieren eines Prozessors (21), der in jedem der Vielzahl von Knoten (10 bis 10e) enthalten ist;
Übertragen von Übertragungsdaten, in denen die physikalische Adresse und die Prozessoridentifikationsinformationen zum Zugreifen auf einen Speicherbereich enthalten sind, der durch die physikalische Adresse angegeben wird;
Empfangen, bei dem die Übertragungsdaten empfangen werden, die von anderen Knoten (10 bis 10e) durch die Zwischenverbindung (2) übertragen werden;
wobei das Verfahren durch Folgendes gekennzeichnet ist:
Bestimmen, auf der Basis der physikalischen Adresse, die in den Übertragungsdaten enthalten ist, die von der Empfangseinheit (37) empfangen werden, ob ein Zugang ein Zugang zu einem lokalen Bereich der Speichereinheit (22), auf den nur von dem Knoten aus zugegriffen werden kann, der die Speichereinheit (22) aufweist, oder ein Zugang zu einem gemeinsam genutzten Bereich der Speichereinheit (22) ist, auf den von der Vielzahl von Knoten (10 bis 10e) aus zugegriffen werden kann.

## Revendications

1. Appareil de traitement d'informations (1) comprenant :
une pluralité de noeuds (10 à 10e) ; et
une interconnexion (2) qui connecte entre eux la pluralité de noeuds (10 à 10e) ;
dans lequel chaque noeud de la pluralité de noeuds (10 à 10e) comporte,
un processeur (21),
une unité de mémorisation (22),
une première unité de conversion (35) qui effectue une conversion entre une adresse logique et une adresse physique,
une seconde unité de conversion (36) qui effectue une conversion entre l'adresse physique et des informations d'identification de processeur pour identifier un processeur (21) inclus dans chaque noeud de la pluralité de noeuds (10 à 10e),
une unité de transmission (37) qui transmet des données de transmission incluant l'adresse physique et les informations d'identification de processeur pour accéder à une zone de mémorisation indiquée par l'adresse physique,
une unité de réception (37) qui reçoit les données de transmission transmises par un autre noeud (10 à 10e) par l'intermédiaire de l'interconnexion (2),
l'appareil de traitement d'informations étant **caractérisé en ce qu'**il comprend en outre :
une unité de détermination locale (36) qui détermine si un accès est un accès à une zone locale de l'unité de mémorisation (22) accessible uniquement par le noeud incluant l'unité de mémorisation (22) ou un accès à une zone partagée de l'unité de mémorisation (22) accessible par la pluralité de noeuds (10 à 10e) sur la base de l'adresse physique incluse dans les données de transmission reçues par l'unité de réception (37).

2. Appareil de traitement d'informations (1) selon la revendication 1, dans lequel
la zone partagée d'une unité de mémorisation est allouée aux adresses physiques dont un bit situé dans une position prédéterminée possède la même valeur,
la zone locale des unités de mémorisation est allouée aux adresses physiques dont un bit situé dans la position prédéterminée possède une valeur différente de la valeur du bit situé dans la position prédéterminée des adresses physiques allouées à la zone partagée, et
l'unité de détermination locale (36) détermine si un accès est l'accès à la zone locale ou l'accès à la zone partagée en fonction de la valeur du bit situé dans la position prédéterminée de l'adresse physique incluse dans les données de transmission.

3. Appareil de traitement d'informations (1) selon la revendication 1 ou 2, dans lequel
la zone locale et la zone partagée sont allouées à toutes les adresses physiques des unités de mémorisation incluses dans chaque noeud de la pluralité de noeuds (10 à 10e), et
l'unité de détermination locale (36) détermine si un accès est l'accès à la zone locale ou l'accès à la zone partagée en fonction de la valeur du bit le plus significatif de l'adresse physique incluse dans les données de transmission.

4. Appareil de traitement d'informations (1) selon l'une quelconque des revendications 1 à 3, dans lequel
l'unité de transmission (37) transmet une réponse négative indiquant qu'un accès à un noeud d'une source de transmission des données de transmission n'est pas autorisé dans le cas où l'unité de détermination locale (36) détermine que l'accès est l'accès à la zone locale.

5. Appareil de traitement d'informations (1) selon l'une quelconque des revendications 1 à 4, comprenant en outre :
un dispositif de mémorisation (34) qui contient les informations d'identification de processeur et une adresse physique allouée à l'unité de mémorisation (22) du noeud incluant le processeur (21) représenté par les informations d'identification de processeur en association entre elles, dans lequel
la seconde unité de conversion (36) convertit l'adresse physique en informations d'identification de processeur mémorisées dans le dispositif de mémorisation (34) en association avec l'adresse physique.

6. Appareil de traitement d'informations (1) selon la revendication 5, comprenant en outre :
un dispositif de commande qui réécrit les informations d'identification de processeur et l'adresse physique mémorisées dans le dispositif de mémorisation (34).

7. Appareil de traitement d'informations (1) selon l'une quelconque des revendications 1 à 6, dans lequel chaque noeud de la pluralité de noeuds (10 à 10e) comporte une unité de commande de répertoire qui gère l'identité des données mises en antémémoire par l'un quelconque des noeuds (10 à 10e) en utilisant un répertoire qui représente un noeud mettant en antémémoire les données provenant de l'unité de mémorisation (22) incluse dans le noeud.

8. Appareil de traitement d'informations (1) selon l'une quelconque des revendications 1 à 7, dans lequel chaque noeud de la pluralité de noeuds (10 à 10e) comporte en outre :
une unité de mise en antémémoire qui met en antémémoire les données provenant des unités de mémorisation incluses dans la pluralité de noeuds (10 à 10e) ; et
une unité de détermination (36) qui, dans le cas où un échec d'accès à l'antémémoire se produit, détermine si l'adresse physique à laquelle s'est produit l'échec d'accès à l'antémémoire est une adresse physique de l'unité de mémorisation (22) incluse dans l'un quelconque des autres noeuds (10 à 10e), dans lequel
la seconde unité de conversion (36) convertit l'adresse physique en informations d'identification de processeur dans le cas où l'unité de détermination (36) a déterminé que l'adresse physique à laquelle s'est produit l'échec d'accès à l'antémémoire est l'adresse physique de l'unité de mémorisation (22) incluse dans l'un quelconque des autres noeuds (10 à 10e).

9. Appareil de traitement d'informations (1) selon l'une quelconque des revendications 2 à 7, dans lequel le processeur exécute un système d'exploitation réglant la première unité de conversion (35) de façon à effectuer une conversion entre l'adresse logique utilisée par une application et l'adresse physique allouée à la zone partagée, dans le cas où l'application exige l'acquisition des données partagées.

10. Procédé d'accès à une mémoire exécutée par chaque noeud d'une pluralité de noeuds (10 à 10e), le procédé comprenant :
la conversion entre une adresse logique et une adresse physique, et entre l'adresse physique et des informations d'identification de processeur pour identifier un processeur (21) inclus dans chaque noeud de la pluralité de noeuds (10 à 10e) ;
la transmission de données de transmission incluant l'adresse physique et les informations d'identification de processeur pour accéder à une zone de mémorisation indiquée par l'adresse physique ;
la réception des données de transmission transmises par les autres noeuds (10 à 10e) par l'intermédiaire de l'interconnexion (2) ;
le procédé étant **caractérisé par** :
la détermination du fait qu'un accès est un accès à une zone locale de l'unité de mémorisation (22) accessible uniquement par le noeud incluant l'unité de mémorisation (22) ou un accès à une zone partagée de l'unité de mémorisation (22) accessible par la pluralité de noeuds (10 à 10e) sur la base de l'adresse physique incluse dans les données de transmission reçues par l'unité de réception (37).
